# EUROPEAN PATENT APPLICATION

(11) **EP 3 294 005 A1**
(43) Date of publication of application: **14.03.2018**
(21) Application number: 16802538.5
(22) Date of filing: 31.05.2016
(51) Int. Cl.: H04W 36/08, H04W 36/36

(54) **COMMUNICATION METHOD, ACCESS NETWORK ELEMENT AND USER EQUIPMENT**

(30) Priority: 02.06.2015 CN 201510296148
(71) Applicant: Huawei Technologies Co., Ltd., Longgang District Shenzhen, Guangdong 518129 (CN)
(72) Inventor: CHEN, Liang, Shenzhen Guangdong 518129 (CN)
(74) Representative: Körber, Martin Hans
(86) International application number: PCT/CN2016/084045
(87) International publication number: WO 2016/192615

(57) **Abstract**

Embodiments of the present invention disclose a communication method, a network element of an access network, and user equipment, so as to provide a base station service for a user in a target area by using UE having a base station capability in the target area as a base station, and save costs of disposing a micro base station or a pico base station. The method in the embodiments of the present invention includes: determining, by a network element of an access network, a target area, and determining first UE in at least one UE, where the at least one UE has a base station capability, and the at least one UE is located in the target area, or a minimum distance between the at least one UE and the target area is less than a first preset distance; and sending an activation message to the first UE, to activate a base station function of the first UE. The present invention further provides a network element of an access network and user equipment, so as to provide a base station service for a user in a target area.

## Description

This application claims priority to Chinese Patent Application No. CN201510296148.9, filed with the Chinese Patent Office on June 2, 2015 and entitled "COMMUNICATION METHOD, NETWORK ELEMENT OF ACCESS NETWORK, AND USER EQUIPMENT", which is incorporated herein by reference in its entirety.

### TECHNICAL FIELD

The present invention relates to the field of wireless communications, and in particular, to a communication method, a network element of an access network, and user equipment.

### BACKGROUND

With continuous development of communications technologies, a modem life is closely bound up with networks. In some application scenarios, users still cannot obtain satisfying services due to limitations of existing wireless communications technologies. For example, at a blind spot that is not covered by a network in a cell, user equipment (UE, User Equipment) cannot access a network. Alternatively, in some prosperous districts, excessive UEs need to access a network. This is beyond a service capability of a base station. Consequently, the user equipment cannot access the network, or frequently gets offline after accessing the network.

To resolve a communication problem of a coverage blind spot in a cell or network congestion, a method for providing a network service by a mobile device (for example, a dedicated on-board base station) is provided in the prior art. The mobile device can provide a good network signal to cover a blind spot in a cell or a prosperous district, and can provide a service for users in a fixed area or users in multiple areas.

In a first case, when the mobile device provides a service for users in a fixed area, the mobile device has a same function as a fixed micro base station or a fixed pico base station. However, compared with the micro base station or the fixed pico base station, the mobile device has much higher use costs.

In a second case, the mobile device provides a service for users in multiple areas. When leaving an area A, the mobile device cannot continue providing a service for the area A, and users in the area A cannot access a network. Consequently, actual requirements of the users cannot be satisfied, and user experience is poor. In addition, when entering an area B and providing a service for the area, a configuration parameter of an original cell is already configured for the mobile device. Therefore, the mobile device needs to clear the configuration parameter of the original cell, adjust a configuration parameter to adapt to the area B, and register or update node information on a core network to implement a base station function. In addition, the mobile device needs to adjust an air interface resource according to an environmental change, to avoid interference to the original cell. An implementation process is relatively complex, and it is very difficult for actual application.

### SUMMARY

Embodiments of the present invention provide a communication method, a network element of an access network, and user equipment, so as to provide a base station service for a user in a target area by using UE having a base station capability in the target area as a base station, and save costs of disposing a micro base station or a pico base station.

A first aspect of the present invention provides a network element of an access network, including:
a determining module, configured to determine a target area, where
the determining module is further configured to determine first UE in at least one user equipment UE, where the at least one UE has a base station capability, and the at least one UE is located in the target area, or a minimum distance between the at least one UE and the target area is less than a first preset distance; and
a sending module, configured to send an activation message to the first UE, to activate a base station function of the first UE.

With reference to the first aspect of the present invention, in a first possible implementation of the first aspect of the present invention, the network element of an access network further includes:
a first receiving module, configured to receive a message sent by the at least one UE, where the message is used to indicate that the at least one UE can be configured to be a base station, where
the sending module is further configured to send a base station configuration parameter to the at least one UE, so that the at least one UE configures, according to the base station configuration parameter, the at least one UE to be UE having the base station capability, where the base station configuration parameter corresponds to the target area.

With reference to the first aspect of the present invention or the first possible implementation of the first aspect of the present invention, in a second possible implementation of the first aspect of the present invention, that the determining module is configured to determine first UE in at least one UE specifically includes:
the determining module is configured to: receive measurement information sent by the at least one UE; and determine, according to the measurement information, UE having an optimal base station capability in the at least one UE as the first UE.

With reference to the first possible implementation of the first aspect of the present invention, in a third possible implementation of the first aspect of the present invention, that the sending module is configured to send a base station configuration parameter to the at least one UE specifically includes:
the sending module is configured to send the base station configuration parameter to the at least one UE by means of area broadcast; or
the sending module is configured to send the base station configuration parameter to the at least one UE in a multicast manner; or
the sending module is configured to send the base station configuration parameter to the at least one UE in a point to point P2P manner; or
the sending module is configured to send a parameter transmission control message to UE carrying the base station configuration parameter, so that the UE carrying the base station configuration parameter sends the base station configuration parameter to the at least one UE according to the parameter transmission control message.

With reference to the first aspect of the present invention or the first possible implementation of the first aspect of the present invention or the second possible implementation of the first aspect of the present invention or the third possible implementation of the first aspect of the present invention, in a fourth possible implementation of the first aspect of the present invention, the network element of an access network further includes:
a statistics collection module, configured to respectively collect statistics on traffic of each area in a preset time period.

With reference to the fourth possible implementation of the first aspect of the present invention, in a fifth possible implementation of the first aspect of the present invention, that a determining module is configured to determine a target area specifically includes:
the determining module is configured to determine an area corresponding to traffic greater than first preset traffic as the target area; or
the determining module is configured to determine an area corresponding to traffic less than second preset traffic as the target area.

With reference to the first aspect of the present invention or the first possible implementation of the first aspect of the present invention, in a sixth possible implementation of the first aspect of the present invention,
the sending module is further configured to: if a minimum distance between the first UE and the target area is greater than or equal to a second preset distance, send a clear instruction to the first UE, so that the first UE clears a configuration parameter of the first UE according to the clear instruction.

With reference to the second possible implementation of the first aspect of the present invention, in a seventh possible implementation of the first aspect of the present invention, the network element of an access network further includes:
a judging module, configured to: determine whether the first UE satisfies a preset condition of base station handover; and if yes, trigger the determining module to determine, according to the measurement information, that UE having an optimal base station capability in remaining UE is second UE, where
the determining module is further configured to determine, according to the measurement information, the UE having an optimal base station capability in the remaining UE as the second UE, where the remaining UE is other UE in the at least one UE other than the first UE;
the sending module is further configured to send an activation message to the second UE, to activate a base station function of the second UE; and
the sending module is further configured to send a handover control message to the first UE, so that the first UE hands over a user in a first cell from the first cell to a second cell according to the handover control message, where the first cell corresponds to the first UE, and the second cell corresponds to the second UE; and
a second receiving module, further configured to receive a handover complete message sent by the first UE, where
the sending module is further configured to send a deactivation message to the first UE, so that the first UE deactivates the base station function of the first UE according to the deactivation message.

With reference to the seventh possible implementation of the first aspect of the present invention, in an eighth possible implementation of the first aspect of the present invention, the judging module is specifically configured to: determine whether the second UE whose base station capability is superior to the base station capability of the first UE exists in the remaining UE; and if yes, determine that the first UE satisfies the preset condition of base station handover.

With reference to the seventh possible implementation of the first aspect of the present invention, in a ninth possible implementation of the first aspect of the present invention,
the judging module is specifically configured to: determine whether a distance between the first UE and a center of the target area exceeds a preset distance; and if yes, determine that the first base station satisfies the preset condition of base station handover.

With reference to the seventh possible implementation of the first aspect of the present invention, in a tenth possible implementation of the first aspect of the present invention,
when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

A second aspect of the present invention provides UE, including:
a receiving module, configured to: when the UE is located in the target area, or a minimum distance between the UE and the target area is less than a first preset distance, receive an activation message sent by a network element of an access network; and
an activation module, configured to activate a base station function of the UE according to the activation message.

With reference to the second aspect of the present invention, in a first possible implementation of the second aspect of the present invention, the UE further includes:
a sending module, configured to send a message to the network element of an access network, where the message is used to indicate that the UE can be configured to be a base station, where
the receiving module is further configured to receive a base station configuration parameter sent by the network element of an access network; and
the UE further includes:
   a configuration module, configured to configure, according to the base station configuration parameter, the UE to be UE having a base station capability.

With reference to the second aspect of the present invention, in a second possible implementation of the second aspect of the present invention, the UE further includes:
an obtaining module, configured to obtain measurement information, where
the sending module is configured to send the measurement information to the network element of an access network.

With reference to the second aspect of the present invention, in a third possible implementation of the second aspect of the present invention,
the receiving module is further configured to receive a handover control message sent by the network element of an access network;
the sending module is further configured to send, according to the handover control message, a cell handover command to a user served by the UE;
the sending module is further configured to send a handover complete message to the network element of an access network; the receiving module is further configured to receive a deactivation message sent by the network element of an access network; and
the UE further includes:
a deactivation module, configured to deactivate the base station function of the UE according to the deactivation message.

With reference to the second aspect of the present invention or the possible implementations of the second aspect, in a fourth possible implementation of the second aspect of the present invention,
the receiving module is configured to receive a clear instruction sent by the network element of an access network; and
the UE further includes:
a clear module, configured to clear a configuration parameter of the UE according to the clear instruction.

A third aspect of the present invention provides a communication method, including:
determining, by a network element of an access network, a target area;
determining, by the network element of an access network, first UE in at least one user equipment UE, where the at least one UE has a base station capability, and the at least one UE is located in the target area, or a minimum distance between the at least one UE and the target area is less than a first preset distance; and
sending, by the network element of an access network, an activation message to the first UE, to activate a base station function of the first UE.

With reference to the third aspect of the present invention, in a first possible implementation of the third aspect of the present invention, the method further includes:
receiving, by the network element of an access network, a message sent by the at least one UE, where the message is used to indicate that the at least one UE can be configured to be a base station; and
sending, by the network element of an access network, a base station configuration parameter to the at least one UE, so that the at least one UE configures, according to the base station configuration parameter, the at least one UE to be UE having the base station capability, where the base station configuration parameter corresponds to the target area.

With reference to the third aspect of the present invention or the first possible implementation of the third aspect of the present invention, in a second possible implementation of the third aspect of the present invention, the method further includes: the determining, by the network element of an access network, first UE in at least one UE includes:
receiving, by the network element of an access network, measurement information sent by the at least one UE; and
determining, by the network element of an access network according to the measurement information, UE having an optimal base station capability in the at least one UE as the first UE.

With reference to the first possible implementation of the third aspect of the present invention, in a third possible implementation of the third aspect of the present invention, the sending, by the network element of an access network, a base station configuration parameter to the at least one UE includes:
sending, by the network element of an access network, the base station configuration parameter to the at least one UE by means of area broadcast; or
sending, by the network element of an access network, the base station configuration parameter to the at least one UE in a multicast manner; or
sending, by the network element of an access network, the base station configuration parameter to the at least one UE in a point to point P2P manner; or
sending, by the network element of an access network, a parameter transmission control message to UE carrying the base station configuration parameter, so that the UE carrying the base station configuration parameter sends the base station configuration parameter to the at least one UE according to the parameter transmission control message.

With reference to the third aspect of the present invention or the first possible implementation of the third aspect of the present invention or the second possible implementation of the third aspect of the present invention or the third possible implementation of the third aspect of the present invention, in a fourth possible implementation of the third aspect of the present invention, the method further includes:
respectively collecting, by the network element of an access network, statistics on traffic of each area in a preset time period.

With reference to the fourth possible implementation of the third aspect of the present invention, in a fifth possible implementation of the third aspect of the present invention, the determining, by a network element of an access network, a target area includes:
determining, by the network element of an access network, an area corresponding to traffic greater than first preset traffic as the target area; or
determining, by the network element of an access network, an area corresponding to traffic less than second preset traffic as the target area.

With reference to the third aspect of the present invention or the first possible implementation of the third aspect of the present invention, in a sixth possible implementation of the third aspect of the present invention, after the sending, by the network element of an access network, an activation message to the first UE, the method includes:
if a minimum distance between the first UE and the target area is greater than or equal to a second preset distance, sending, by the network element of an access network, a clear instruction to the first UE, so that the first UE clears a base station configuration parameter of the first UE according to the clear instruction.

With reference to the second possible implementation of the third aspect of the present invention, in a seventh possible implementation of the third aspect of the present invention, after the sending, by the network element of an access network, an activation message to the first UE, the method includes:
determining, by the network element of an access network, whether the first UE satisfies a preset condition of base station handover; and if yes, determining, according to the measurement information, that UE having an optimal base station capability in remaining UE is second UE, where the remaining UE is other UE in the at least one UE other than the first UE;
sending, by the network element of an access network, an activation message to the second UE, to activate a base station function of the second UE;
sending, by the network element of an access network, a handover control message to the first UE, so that the first UE hands over a user in a first cell from the first cell to a second cell according to the handover control message, where the first cell corresponds to the first UE, and the second cell corresponds to the second UE;
receiving, by the network element of an access network, a handover complete message sent by the first UE; and
sending, by the network element of an access network, a deactivation message to the first UE, so that the first UE deactivates the base station function of the first UE according to the deactivation message.

With reference to the seventh possible implementation of the third aspect of the present invention, in an eighth possible implementation of the third aspect of the present invention, the determining, by the network element of an access network, whether the first UE satisfies a preset condition of base station handover includes:
determining, by the network element of an access network, whether the second UE whose base station capability is superior to the base station capability of the first UE exists in the remaining UE; and if yes, determining that the first UE satisfies the preset condition of base station handover.

With reference to the seventh possible implementation of the third aspect of the present invention, in a ninth possible implementation of the third aspect of the present invention, the determining, by the network element of an access network, whether the first UE satisfies a preset condition of base station handover includes:
determining, by the network element of an access network, whether a distance between the first UE and a center of the target area exceeds a third preset distance; and if yes, determining that the first base station satisfies the preset condition of base station handover.

With reference to the seventh possible implementation of the third aspect of the present invention, in a tenth possible implementation of the third aspect of the present invention,
when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

A fourth aspect of the embodiments of the present invention provides a communication method, including:
when user equipment UE is located in the target area, or a minimum distance between the UE and the target area is less than a first preset distance, receiving, by the UE, an activation message sent by a network element of an access network, where the UE has a base station capability; and
activating, by the UE, a base station function of the UE according to the activation message.

With reference to the fourth aspect of the present invention, in a first possible implementation of the fourth aspect of the present invention, the method further includes:
sending, by the UE, a message to the network element of an access network, where the message is used to indicate that the UE can be configured to be a base station;
receiving, by the UE, a base station configuration parameter sent by the network element of an access network; and
configuring, by the UE according to the base station configuration parameter, the UE to be UE having the base station capability.

With reference to the fourth aspect of the present invention, in a second possible implementation of the fourth aspect of the present invention, the method further includes:
obtaining, by the UE, measurement information; and
sending, by the UE, the measurement information to the network element of an access network.

With reference to the fourth aspect of the present invention, in a third possible implementation of the fourth aspect of the present invention, after the activating, by the UE, a base station function of the UE according to the activation message, the method includes:
receiving, by the UE, a handover control message sent by the network element of an access network;
sending, by the UE according to the handover control message, a cell handover command to a user served by the UE;
sending, by the UE, a handover complete message to the network element of an access network;
receiving, by the UE, a deactivation message sent by the network element of an access network; and deactivating, by the UE, the base station function of the UE according to the deactivation message.

With reference to the fourth aspect of the present invention or the possible implementations of the fourth aspect, in a fourth possible implementation of the fourth aspect of the present invention, after the activating, by the UE, a base station function of the UE according to the activation message, the method includes:
receiving, by the UE, a clear instruction sent by the network element of an access network; and
clearing, by the UE, a configuration parameter of the UE according to the clear instruction.

A fifth aspect of the present invention provides a network element of an access network, including:
a receiving apparatus, a transmission apparatus, a processor, and a memory, where the processor and the memory receive external information of the network element of an access network by using the receiving apparatus, and the processor and the memory transmit information to an exterior of the network element of an access network by using the transmission apparatus;
the memory stores an activation message;
the processor is configured to determine a target area;
the processor is further configured to determine first UE in at least one user equipment UE, where the at least one UE has a base station capability, and the at least one UE is located in the target area, or a minimum distance between the at least one UE and the target area is less than a first preset distance; and
the transmission apparatus is configured to send the activation message to the first UE, to activate a base station function of the first UE.

With reference to the fifth aspect of the present invention, in a first possible implementation of the fifth aspect of the present invention, the memory is configured to store a message and a base station configuration parameter;
the receiving apparatus is configured to receive the message sent by the at least one UE, where the message is used to indicate that the at least one UE can be configured to be a base station; and
the transmission apparatus is further configured to send the base station configuration parameter to the at least one UE, so that the at least one UE configures, according to the base station configuration parameter, the at least one UE to be UE having the base station capability, where the base station configuration parameter corresponds to the target area.

With reference to the fifth aspect of the present invention or the first possible implementation of the fifth aspect of the present invention, in a second possible implementation of the fifth aspect of the present invention, that the processor is configured to determine first UE in at least one UE specifically includes:
the processor is further configured to: receive measurement information sent by the at least one UE; and determine, according to the measurement information, UE having an optimal base station capability in the at least one UE as the first UE.

With reference to the first possible implementation of the fifth aspect of the present invention, in a third possible implementation of the fifth aspect of the present invention, that the transmission apparatus is configured to send the base station configuration parameter to the at least one UE specifically includes:
the transmission apparatus is configured to send the base station configuration parameter to the at least one UE by means of area broadcast; or
the transmission apparatus is configured to send the base station configuration parameter to the at least one UE in a multicast manner; or
the transmission apparatus is configured to send the base station configuration parameter to the at least one UE in a point to point P2P manner; or
the transmission apparatus is configured to send a parameter transmission control message to UE carrying the base station configuration parameter, so that the UE carrying the base station configuration parameter sends the base station configuration parameter to the at least one UE according to the parameter transmission control message.

With reference to the fifth aspect of the present invention or the first possible implementation of the fifth aspect of the present invention or the second possible implementation of the fifth aspect of the present invention or the third possible implementation of the fifth aspect of the present invention, in a fourth possible implementation of the fifth aspect of the present invention,
the processor is further configured to respectively collect statistics on traffic of each area in a preset time period.

With reference to the fourth possible implementation of the fifth aspect of the present invention, in a fifth possible implementation of the fifth aspect of the present invention, that the processor is configured to determine a target area specifically includes:
the processor is configured to determine an area corresponding to traffic greater than first preset traffic as the target area; or
the processor is configured to determine an area corresponding to traffic less than second preset traffic as the target area.

With reference to the fifth aspect of the present invention or the first possible implementation of the fifth aspect of the present invention, in a sixth possible implementation of the fifth aspect of the present invention, the memory further stores a clear instruction; and
the transmission apparatus is further configured to: if a minimum distance between the first UE and the target area is greater than or equal to a second preset distance, send the clear instruction to the first UE, so that the first UE clears a configuration parameter of the first UE according to the clear instruction.

With reference to the second possible implementation of the fifth aspect of the present invention, in a seventh possible implementation of the fifth aspect of the present invention, after the sending, by the network element of an access network, an activation message to the first UE, the method includes:
the processor is further configured to: determine whether the first UE satisfies a preset condition of base station handover; and if yes, determine, according to the measurement information, that UE having an optimal base station capability in remaining UE is second UE, where the remaining UE is other UE in the at least one UE other than the first UE;
the transmission apparatus is further configured to send the activation message to the second UE, to activate a base station function of the second UE;
the transmission apparatus is further configured to send a handover control message to the first UE, so that the first UE hands over a user in a first cell from the first cell to a second cell according to the handover control message, where the first cell corresponds to the first UE, and the second cell corresponds to the second UE;
the receiving apparatus is further configured to receive a handover complete message sent by the first UE; and
the transmission apparatus is further configured to send a deactivation message to the first UE, so that the first UE deactivates the base station function of the first UE according to the deactivation message.

With reference to the seventh possible implementation of the fifth aspect of the present invention, in an eighth possible implementation of the fifth aspect of the present invention, that the processor is configured to determine whether the first UE satisfies a preset condition of base station handover specifically includes:
the processor is configured to: determine whether the second UE whose base station capability is superior to the base station capability of the first UE exists in the remaining UE; and if yes, determine that the first UE satisfies the preset condition of base station handover.

With reference to the seventh possible implementation of the fifth aspect of the present invention, in a ninth possible implementation of the fifth aspect of the present invention, that the processor is configured to determine whether the first UE satisfies a preset condition of base station handover specifically includes:
the processor is configured to: determine whether a distance between the first UE and a center of the target area exceeds a preset distance; and if yes, determine that the first base station satisfies the preset condition of base station handover.

With reference to the seventh possible implementation of the fifth aspect of the present invention, in a tenth possible implementation of the fifth aspect of the present invention,
when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

A sixth aspect of the present invention provides user equipment UE, including:
a receiving apparatus, a transmission apparatus, a processor, and a memory, where the processor and the memory receive external information of a network element of an access network by using the receiving apparatus, and the processor and the memory transmit information to an exterior of the network element of an access network by using the transmission apparatus;
the receiving apparatus is configured to receive an activation message sent by the network element of an access network when the UE is located in the target area, or a minimum distance between the UE and the target area is less than a first preset distance;
the memory is configured to store the activation message; and
the processor is configured to activate a base station function of the UE according to the activation message.

With reference to the sixth aspect of the present invention, in a first possible implementation of the sixth aspect of the present invention, the memory is further configured to store a message and a base station configuration parameter;
the transmission apparatus is configured to send the message to the network element of an access network, where the message is used to indicate that the UE can be configured to be a base station;
the receiving apparatus is further configured to receive the base station configuration parameter sent by the network element of an access network; and
the processor is further configured to configure, according to the base station configuration parameter, the UE to be UE having a base station capability.

With reference to the sixth aspect of the present invention, in a second possible implementation of the sixth aspect of the present invention, the memory is further configured to store measurement information;
the processor is used for the measurement information; and
the transmission apparatus is configured to send the measurement information to the network element of an access network.

With reference to the sixth aspect of the present invention, in a third possible implementation of the sixth aspect of the present invention, the memory is further configured to store a handover control message, a cell handover command, a handover complete message, and a deactivation message;
the receiving apparatus is further configured to receive the handover control message sent by the network element of an access network;
the transmission apparatus is further configured to send, according to the handover control message, the cell handover command to a user served by the UE;
the transmission apparatus is further configured to send the handover complete message to the network element of an access network;
the receiving apparatus is further configured to receive the deactivation message sent by the network element of an access network; and
the processor is configured to deactivate the base station function of the UE according to the deactivation message.

With reference to the sixth aspect of the present invention or the possible implementations of the sixth aspect, in a fourth possible implementation of the sixth aspect of the present invention, the memory is further configured to store a clear instruction;
the receiving apparatus is further configured to receive the clear instruction sent by the network element of an access network; and
the processor is further configured to clear a configuration parameter of the UE according to the clear instruction.

It can be learned from the foregoing technical solutions that the embodiments of the present invention have the following advantages:

A network element of an access network determines a target area; determines first UE in at least one UE, where the at least one UE has a base station capability, and the at least one UE is located in the target area, or a minimum distance between the at least one UE and the target area is less than a preset threshold; and sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

### BRIEF DESCRIPTION OF DRAWINGS

FIG. 1 is a schematic architectural diagram of an LTE system according to embodiments of the present invention;
FIG. 2 is a schematic diagram of an embodiment of a network element of an access network according to embodiments of the present invention;
FIG. 3 is a schematic diagram of another embodiment of a network element of an access network according to embodiments of the present invention;
FIG. 4 is a schematic diagram of an embodiment of UE according to embodiments of the present invention;
FIG. 5 is a schematic diagram of another embodiment of UE according to embodiments of the present invention;
FIG. 6 is a schematic flowchart of a communication method according to an embodiment of the present invention;
FIG. 7 is another schematic flowchart of a communication method according to an embodiment of the present invention;
FIG. 8 is another schematic flowchart of a communication method according to an embodiment of the present invention;
FIG. 9 is another schematic flowchart of a communication method according to an embodiment of the present invention;
FIG. 10 is a schematic diagram of another embodiment of a network element of an access network according to embodiments of the present invention; and
FIG. 11 is a schematic diagram of another embodiment of UE according to embodiments of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

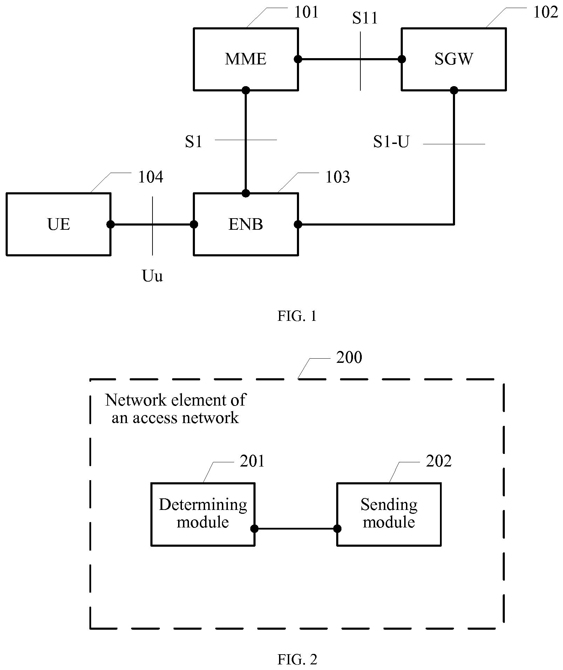

Referring to FIG. 1, a communication method in the embodiments of the present invention may be applied to an LTE (Long Term Evolution, Long Term Evolution) system. The LTE system includes: an evolved packet core (EPC, Evolved Packet Core) and a network element of an access network. The EPC includes: a mobility management entity (MME, Mobility Management Entity) and a serving gateway (SGW, Serving Gateway).

Functions of the MME 101 include: (1) service processing based on network attached storage (NAS, Network Attached Storage) signaling; (2) providing security (encryption and integrity protection) protection for NAS signaling; (3) accessibility (including controlling and performing paging transmission) of idle UE; (4) tracking area list management; (5) selection of a packet data gateway and a serving gateway; (6) selection of an MME when the MME needs to be changed during handover; (7) selection of a serving GPRS support node (SGSN, Serving GPRS Support Node) during switching to a 2G or 3 G network; (8) performing roaming management; (9) performing authentication and authorization on a user; (10) a bearer management function including setup of a dedicated bearer; (11) lawful interception; (12) alarm message transmission; (13) an accessibility function of UE; (14) S1 connection management; (15) security control; (16) user handover control in the MME; and the like.

Functions of the SGW 102 include: (1) serving as a local mobility anchor during handover between base stations; (2) sending one or more "ending flags" to a source base station; (3) serving as a local mobility anchor during cross-standard handover; (4) downlink packet caching and initiating a service request procedure triggered by a network in an idle mode; (5) lawful interception; (6) packet routing and forwarding; (7) uplink/downlink transmission layer packet tagging; (8) charging for operators; and (9) an offline charging function.

The EPC further includes another function entity. This is not related to the present invention, and details are not described herein.

The network element of an access network includes an evolved NodeB (ENB, Evolved NodeB).

Functions of the ENB 103 include: (1) a radio resource management function; (2) Internet Protocol (IP, Internet Protocol) header compression and user data stream encryption; (3) selection of an MME during UE attach; (4) routing user plane data to the SGW; (5) scheduling and transmission of paging information; (6) scheduling and transmission of broadcast information; (7) measurement for mobility or scheduling, or measurement message configuration; and the like.

UE 104 may be connected to the MME or the SGW by using the ENB, to complete a communication connection.

It should be noted that the communication method in the embodiments of the present invention may be implemented in the LTE system, or may be implemented in another cellular communications system. In LTE, the network element of an access network is an ENB. In another cellular system, the network element of an access network may be a base station in another form. This is not limited herein.

Referring to FIG. 2, an embodiment of a network element of an access network according to embodiments of the present invention includes:
a determining module 201, configured to determine a target area, where
   the determining module 201 is further configured to determine first UE in at least one UE, where the at least one UE has a base station capability, and the at least one UE is located in the target area, or a minimum distance between the at least one UE and the target area is less than a first preset distance; and
a sending module 202, configured to send an activation message to the first UE, to activate a base station function of the first UE.

In this embodiment, the determining module 201 may determine a target area, and determine first UE in at least one UE, where the at least one UE has a base station capability, and the at least one UE is located in the target area, or a minimum distance between the at least one UE and the target area is less than a preset threshold. The sending module 202 sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

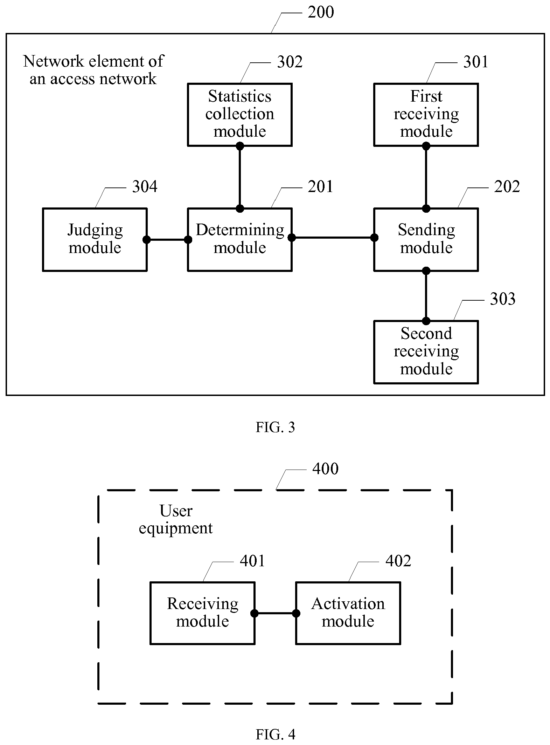

Referring to FIG. 3, an embodiment of a network element of an access network according to embodiments of the present invention includes:
a determining module 201, configured to determine a target area, where
   the determining module 201 is further configured to determine first UE in at least one UE, where the at least one UE has a base station capability, and the at least one UE is located in the target area, or a minimum distance between the at least one UE and the target area is less than a first preset distance; and
a sending module 202, configured to send an activation message to the first UE, to activate a base station function of the first UE.

In some embodiments of the present invention, the network element of an access network further includes:
a first receiving module 301, configured to receive a message sent by the at least one UE, where the message is used to indicate that the at least one UE can be configured to be a base station, where
   the sending module 202 is further configured to send a base station configuration parameter to the at least one UE when the first receiving module 301 receives the message sent by the at least one UE, so that the at least one UE configures, according to the base station configuration parameter, the at least one UE to be UE having the base station capability, where the base station configuration parameter corresponds to the target area.

In some embodiments of the present invention, that the determining module 201 is configured to determine first UE in at least one UE specifically includes: the determining module 201 is configured to: receive measurement information sent by the at least one UE; and determine, according to the measurement information, UE having an optimal base station capability in the at least one UE as the first UE.

In some embodiments of the present invention, that the sending module 202 is configured to send a base station configuration parameter to the at least one UE is specifically implemented in the following manner:
the sending module 202 is configured to send the base station configuration parameter to the at least one UE by means of area broadcast; or
the sending module 202 is configured to send the base station configuration parameter to the at least one UE in a multicast manner; or
the sending module 202 is configured to send the base station configuration parameter to the at least one UE in a point to point (P2P, Point to Point) manner; or
the sending module 202 is configured to send a parameter transmission control message to UE carrying the base station configuration parameter, so that the UE carrying the base station configuration parameter sends the base station configuration parameter to the at least one UE according to the parameter transmission control message.

In some embodiments of the present invention, the network element 200 of an access network further includes:
a statistics collection module 302, configured to respectively collect statistics on traffic of each area in a preset time period.

In some embodiments of the present invention, that the determining module 201 is configured to determine a target area is specifically implemented in the following manner:
the determining module 201 is configured to determine an area corresponding to traffic greater than first preset traffic as the target area; or
the determining module 201 is configured to determine an area corresponding to traffic less than second preset traffic as the target area.

In some embodiments of the present invention, the sending module 202 is further configured to: if a minimum distance between the first UE and the target area is greater than or equal to a second preset distance, send a clear instruction to the first UE, so that the first UE clears a configuration parameter of the first UE according to the clear instruction.

In some embodiments of the present invention, the network element 200 of an access network further includes:
a judging module 304, configured to: determine whether the first UE satisfies a preset condition of base station handover; and if yes, trigger the determining module to determine, according to the measurement information, that UE having an optimal base station capability in remaining UE is second UE, where
the determining module 201 is further configured to determine, according to the measurement information, the UE having an optimal base station capability in the remaining UE as the second UE, where the remaining UE is other UE in the at least one UE than the first UE;
the sending module 202 is further configured to send an activation message to the second UE, to activate a base station function of the second UE; and
the sending module 202 is further configured to send a handover control message to the first UE, so that the first UE hands over a user in a first cell from the first cell to a second cell according to the handover control message, where the first cell corresponds to the first UE, and the second cell corresponds to the second UE; and
a second receiving module 303, configured to receive a handover complete message sent by the first UE, where
the sending module 202 is further configured to send a deactivation message to the first UE, so that the first UE deactivates the base station function of the first UE according to the deactivation message.

In some embodiments of the present invention, the judging module 304 is specifically configured to: determine whether the second UE whose base station capability is superior to the base station capability of the first UE exists in the remaining UE; and if yes, determine that the first UE satisfies the preset condition of base station handover.

In some embodiments of the present invention, the judging module 304 is specifically configured to: determine whether a distance between the first UE and a center of the target area exceeds a preset distance; and if yes, determine that the first base station satisfies the preset condition of base station handover.

In some embodiments of the present invention, when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

For ease of understanding, interaction between the modules of the network element of an access network in this embodiment of the present invention is described below in detail by using a specific application scenario.

That the determining module 201 determines a target area may be specifically implemented in the following manners:
the statistics collection module 302 is configured to respectively collect statistics on traffic of each area in a preset time period; and
the determining module 201 is configured to determine an area corresponding to traffic greater than first preset traffic as the target area; or
the determining module 201 is configured to determine an area corresponding to traffic less than second preset traffic as the target area.

The first receiving module 301 receives a message sent by at least one UE, where the message is used to indicate that the at least one UE can be configured to be a base station.

After the first receiving module 301 receives the message sent by the at least one UE, the sending module 202 sends a base station configuration parameter to the at least one UE, where the base station configuration parameter corresponds to the target area.

The determining module 201 determines first UE in the at least one UE, where the at least one UE has a base station capability, and the at least one UE is located in the target area, or a minimum distance between the at least one UE and the target area is less than a first preset distance.

The sending module 202 sends an activation message to the first UE, to activate a base station function of the first UE.

The judging module 304 determines whether the first UE satisfies a preset condition of base station handover; and if yes, the determining module 201 determines, according to measurement information, that UE having an optimal base station capability in remaining UE is second UE, where the remaining UE is other UE in the at least one UE than the first UE.

The sending module 202 sends an activation message to the second UE, to activate a base station function of the second UE.

The sending module 202 sends a handover control message to the first UE, so that the first UE hands over a user in a first cell from the first cell to a second cell according to the handover control message, where the first cell corresponds to the first UE, and the second cell corresponds to the second UE.

The second receiving module 303 receives a handover complete message sent by the first UE.

The sending module 202 sends a deactivation message to the first UE, so that the first UE deactivates the base station function of the first UE according to the deactivation message.

If a minimum distance between the first UE and the target area is greater than or equal to a second preset distance, the sending module 202 sends a clear instruction to the first UE, so that the first UE clears a configuration parameter of the first UE according to the clear instruction.

Referring to FIG. 4, an embodiment of UE according to embodiments of the present invention includes:
a receiving module 401, configured to: when the UE is located in a target area, or a minimum distance between the UE and the target area is less than a first preset distance, receive an activation message sent by a network element of an access network; and
an activation module 402, configured to activate a base station function of the UE according to the activation message.

In this embodiment, when the UE is located in a target area, or a minimum distance between the UE and the target area is less than a first preset distance, the UE receives an activation message sent by a network element of an access network, and activates a base station function of the UE according to the activation message. First UE may provide a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

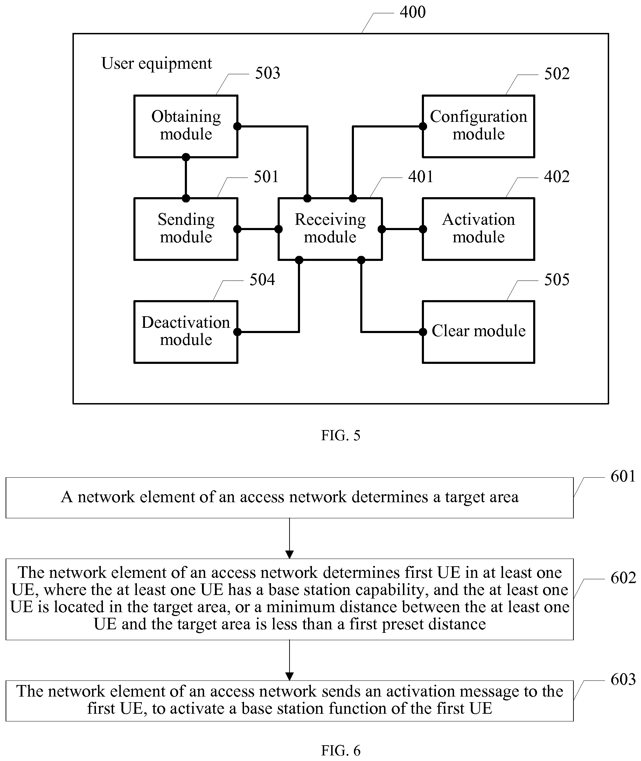

Referring to FIG. 5, another embodiment of UE according to embodiments of the present invention includes:
a receiving module 401, configured to: when the UE is located in a target area, or a minimum distance between the UE and the target area is less than a first preset distance, receive an activation message sent by a network element of an access network; and
an activation module 402, configured to activate a base station function of the UE according to the activation message.

In some embodiments of the present invention, the UE further includes:
a sending module 501, configured to send a message to the network element of an access network, where the message is used to indicate that the UE can be configured to be a base station, where
the receiving module 401 is further configured to receive a base station configuration parameter sent by the network element of an access network; and
the UE further includes:
   a configuration module 502, configured to configure, according to the base station configuration parameter, the UE to be UE having a base station capability.

In some embodiments of the present invention, the UE further includes:
an obtaining module 503, configured to obtain measurement information, where
the sending module 501 is configured to send the measurement information to the network element of an access network.

In some embodiments of the present invention,
the receiving module 401 is further configured to receive a handover control message sent by the network element of an access network;
the sending module 501 is further configured to send, according to the handover control message, a cell handover command to a user served by the UE;
the sending module 501 is further configured to send a handover complete message to the network element of an access network;
the receiving module 401 is further configured to receive a deactivation message sent by the network element of an access network; and
the UE further includes:
a deactivation module 504, configured to deactivate the base station function of the UE according to the deactivation message.

In some embodiments of the present invention, the receiving module 401 is configured to receive a clear instruction sent by the network element of an access network; and
the UE further includes: a clear module 505, configured to clear a configuration parameter of the UE according to the clear instruction.

For ease of understanding, interaction between the modules of the user equipment in this embodiment of the present invention is described below in detail by using a specific application scenario.

When the UE is located in a target area, or a minimum distance between the UE and the target area is less than a first preset distance, the receiving module 401 receives an activation message sent by a network element of an access network.

The activation module 402 activates a base station function of the UE according to the activation message.

Optionally, the sending module 501 sends a message to the network element of an access network, where the message is used to indicate that the UE can be configured to be a base station. The receiving module 401 receives a base station configuration parameter sent by the network element of an access network. The configuration module 502 is configured to configure, according to the base station configuration parameter, the UE to be UE having a base station capability.

Optionally, the obtaining module 503 obtains measurement information. The sending module 501 sends the measurement information to the network element of an access network.

Optionally, the receiving module 401 receives a handover control message sent by the network element of an access network. The sending module 501 sends, according to the handover control message, a cell handover command to a user served by the UE. The sending module 501 sends a handover complete message to the network element of an access network. The receiving module 401 receives a deactivation message sent by the network element of an access network. The deactivation module 504 is configured to deactivate the base station function of the UE according to the deactivation message.

Optionally, the receiving module 401 receives a clear instruction sent by the network element of an access network. The clear module 505 clears a configuration parameter of the UE according to the clear instruction.

The network element of an access network and the user equipment in the embodiments of the present invention are described above from the perspective of apparatuses, and a communication method in the embodiments of the present invention is described below from the perspective of a method.

Referring to FIG. 6, an embodiment of a communication method according to embodiments of the present invention includes the following steps.

601: A network element of an access network determines a target area.

In this embodiment, the network element of an access network may determine the target area, and the target area belongs to network coverage of the network element of an access network. The network element of an access network is a base station, and is configured to implement radio signal transmission between a user and a network element of a core network.

When needing to provide a network service for the target area, the network element of an access network may search for and determine the target area by using a location server. Specifically, the network element of an access network may determine the target area by using a wireless network planning and optimization method. The geographic area may be determined by actually measuring a network signal, and boundaries of the geographic area are marked by terrestrial coordinates. Location information of the geographic area is stored in the location server as the terrestrial coordinates. When needing to provide the network service for the target area, the network element of an access network may search for and determine the target area by using the location server. For a specific process, refer to the prior art, and details are not described herein. The location server may be a logical network element, or may be an independent network element. This is not limited herein.

602: The network element of an access network determines first UE in at least one UE, where the at least one UE has a base station capability, and the at least one UE is located in the target area, or a minimum distance between the at least one UE and the target area is less than a first preset distance.

The network element of an access network may locate the UE. When the at least one UE is located in the target area, or the minimum distance between the at least one UE and the target area is less than the first preset distance, the network element of an access network may determine the first UE in the at least one UE. The at least one UE has the base station capability, and the at least one UE is located in the target area, or the minimum distance between the at least one UE and the target area is less than the first preset distance. It should be noted that the network element of an access network may determine a geographic location of a user by using the geographic location reported by the user or by means of base station positioning, so as to determine an area in which the user is located.

603: The network element of an access network sends an activation message to the first UE, to activate a base station function of the first UE.

After determining the first UE, the network element of an access network sends the activation message to the first UE. The first UE activates the base station function of the first UE according to the activation message, and provides a base station service for a user in the target area.

A network element of an access network determines a target area; determines first UE in at least one UE, where the at least one UE has a base station capability, and the at least one UE is located in the target area, or a minimum distance between the at least one UE and the target area is less than a preset threshold; and sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

During actual application, the communication method in this embodiment of the present invention may be applied to different application scenarios. A description is specifically provided by using the following embodiments.

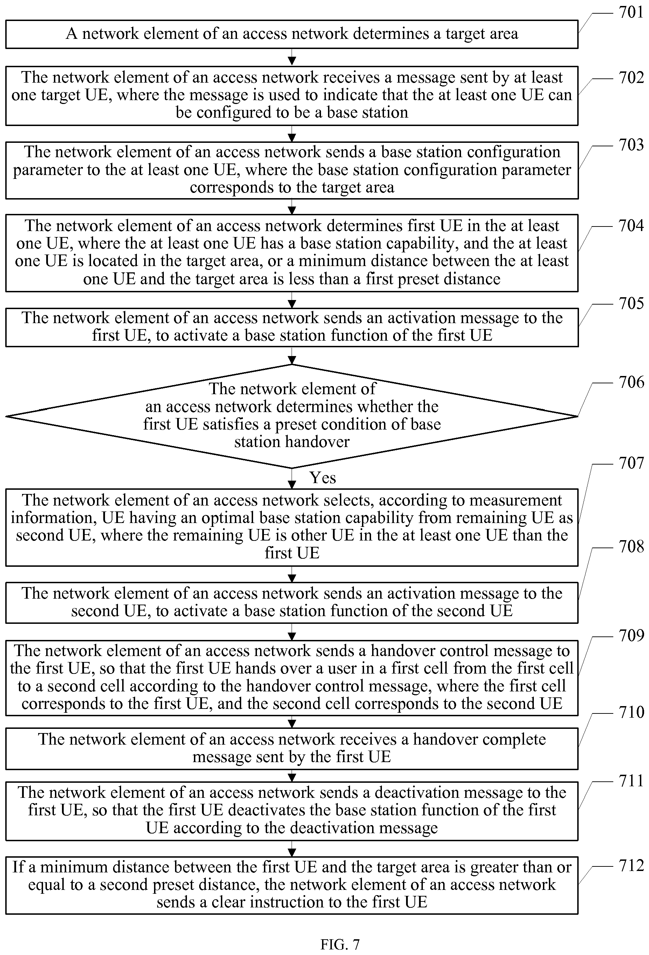

First, the target area is a hotspot area. Referring to FIG. 7, an embodiment of a communication method according to embodiments of the present invention includes the following steps.

701: A network element of an access network determines a target area.

In this embodiment, the network element of an access network is a base station, and the target area is a hotspot area. A hotspot area is a geographic area in which a requirement of a user for a network resource (including a link bandwidth, storage space, and a processing capability of a processor) exceeds a processing capability or a capacity of a network element of an access network corresponding to the area. When needing to provide a network service for the target area, the network element of an access network may search for and determine the target area by using a location server.

Optionally, in another embodiment of the communication method in this embodiment of the present invention, the method further includes: respectively collecting, by the network element of an access network, statistics on traffic of each area in a preset time period.

Specifically, the network element of an access network may divide a service area into multiple areas. When a user has a call, the network element of an access network may record traffic and a geographic location of the user, so as to record traffic of an area in which the user is located. Statistics on traffic of each area is collected in a preset time period. Traffic is telecom load occupied in a process of making a call and completing communication by a user. It should be noted that the network element of an access network may determine the geographic location of the user by using the geographic location reported by the user or by means of base station positioning, so as to determine the area in which the user is located. A volume of traffic is related to a quantity of users, frequency of communication of the users, a time length for communication of the user each time, and a specified investigation time. A larger quantity of communication times, a longer time length for communication, and a longer investigation time indicate a larger volume of traffic. A preset time length may be one day or one hour, or may be another time length. This is not limited herein. The network element of an access network records an area range of the service area by using the location server, and obtains the geographic location of the user.

Therefore, the determining, by a network element of an access network, a target area may be specifically implemented in the following manner: determining, by the network element of an access network, an area corresponding to traffic greater than first preset traffic as the target area.

Specifically, the first preset traffic is traffic causing network congestion. The network element of an access network may determine whether traffic of an area is greater than the first preset traffic; if yes, it indicates that a network of the area is busy, and the area needs more network services; and if not, it indicates that the network of the area is not in a busy state. The first preset traffic may be determined according to a proportion of accessed traffic to accessible traffic. A value of the proportion may be 80% or 90%, or may be another value. This is not limited herein.

702: The network element of an access network receives a message sent by at least one UE, where the message is used to indicate that the at least one UE can be configured to be a base station.

The UE can be configured to be a base station. When the UE is configured to be a base station and is activated, the UE may provide a service for a user within signal coverage of the UE. The UE may be a communications vehicle for which a parameter is not configured, or may be another device. This is not limited herein.

Step 701 and step 702 are not limited to a fixed sequence. Step 701 may be first performed, and then step 702 is performed. Alternatively, step 702 may be first performed, and then step 701 is performed. This is not limited herein.

703: The network element of an access network sends a base station configuration parameter to the at least one UE, where the base station configuration parameter corresponds to the target area.

Specifically, after receiving the message used to indicate that the UE can be configured to be a base station, the network element of an access network sends the base station configuration parameter to the at least one UE in the target area, and registers the at least one UE with a core network. After obtaining the base station configuration parameter, the at least one UE configures, according to the base station configuration parameter, the at least one UE to be UE having a base station capability, and waits to be activated. After being configured to be the UE having the base station capability, the UE may no longer send, to the network element of an access network, the message used to indicate that the UE can be configured to be a base station.

The base station configuration parameter corresponds to the target area, and the base station configuration parameter includes a cell ID, a frequency band, and/or a bandwidth, or may further include another base station parameter. This is not limited herein. The base station configuration parameter may be obtained by means of actual measurement in the target area, and may be stored in the network element of an access network or a network element of the core network. This is not limited herein.

In this embodiment, the sending, by the access network, a base station configuration parameter to the at least one UE in the target area may be implemented in multiple manners, and may be specifically implemented in the following manner:

Optionally, in another embodiment of the communication method in this embodiment of the present invention, the network element of an access network sends the base station configuration parameter to the at least one UE in the target area by means of area broadcast. It may be understood that the base station configuration parameter may be sent to multiple UEs at the same time by means of area broadcast.

Optionally, in another embodiment of the communication method in this embodiment of the present invention, the network element of an access network sends the base station configuration parameter to the at least one UE in the target area in a multicast manner.

Optionally, in another embodiment of the communication method in this embodiment of the present invention, the network element of an access network sends the base station configuration parameter to the at least one UE in the target area in a P2P manner. Specifically, after sending the base station configuration parameter to UE in the target area, the network element of an access network may send the base station configuration parameter to next UE in the target area, and so on. Details are not described herein.

Optionally, in another embodiment of the communication method in this embodiment of the present invention, the network element of an access network sends a parameter transmission control message to UE carrying the base station configuration parameter, so that the UE carrying the base station configuration parameter sends the base station configuration parameter to the at least one UE in the target area according to the parameter transmission control message. Specifically, the UE carrying the base station configuration parameter may directly send, by means of Wireless Fidelity (WIFI, Wireless-Fidelity), microwave, or the like, the base station configuration parameter to UE for which the parameter is not configured.

It should be noted that step 702 and step 703 are a process of obtaining the configuration parameter by UE for which the base station configuration parameter is not configured, and step 704 is a process of selecting UE from UEs for which the base station configuration parameter is already configured. The two processes are not limited to a fixed sequence, and an execution sequence is not limited herein.

704: The network element of an access network determines first UE in the at least one UE, where the at least one UE has a base station capability, and the at least one UE is located in the target area, or a minimum distance between the at least one UE and the target area is less than a first preset distance.

The target area is a hotspot area. When at least one UE having a base station capability exists in the target area, the network element of an access network may determine the first UE in the at least one UE. The UE having the base station capability may be a communications vehicle for which the base station configuration parameter is configured, or may be another device. This is not limited herein.

When the minimum distance between the UE and the target area is less than the first preset distance, the network element of an access network may determine the first UE in the at least one UE. However, when the UE is outside the hotspot area, if the network element of an access network needs to implement normal communication between a user and a network element of a core network, the network element of an access network usually selects UE having a base station capability as a base station in the hotspot area.

Optionally, in another embodiment of the communication method in this embodiment of the present invention, the network element of an access network receives measurement information sent by the at least one UE, and determines, according to the measurement information, UE having an optimal base station capability in the at least one UE as the first UE.

In this embodiment, the measurement information includes at least one of an interference signal of another base station, device security of the UE, a moving speed, a signal processing capability, a battery level, a supported data rate, or an uplink/downlink penalty, or may further include other information. This is not specifically limited herein. A weaker interference signal of another base station, higher device security, a lower moving speed, a stronger signal processing capability, a higher battery level, a higher supported data rate, or a lower uplink/downlink penalty indicates a better base station capability of the UE, and when serving as a base station, the UE may provide a better service for a user; otherwise, the UE may provide a poorer service for the user.

It may be understood that when only one UE having the base station capability exists in the target area, or there is only one UE whose distance from the target area is less than the first preset distance, the network element of an access network may send the base station configuration parameter and an activation message to the UE at the same time, to directly activate a base station function of the UE, so that the UE provides a service for a user in the target area.

It should be noted that the network element of an access network may select another UE having a base station capability as second UE, but the base station capability of the UE is not optimal. Compared with the UE having the optimal base station capability, in this case, a communication service obtained by the user in the target area may be poorer, but flexibility of implementation of the solution is higher.

705: The network element of an access network sends an activation message to the first UE, to activate a base station function of the first UE.

Specifically, the network element of an access network may generate the activation message, and send the activation message to the first UE. After the network element of an access network receives an activation success message fed back by the first UE, the first UE establishes a connection to the network element of an access network, establishes a connection to a network element of a core network by using the network element of an access network, activates the base station function of the first UE according to the activation message, and provides a service for a user in the target area by using the base station function. It should be noted that after detecting at least one UE having the base station capability, the network element of an access network may maintain a communication connection to the network element of a core network. After determining the first UE, the network element of an access network may instantly send the activation message to the first UE. In an LTE network, the communication connection between the network element of an access network and the network element of a core network is an S1 link.

After being activated, the first UE may provide, for the target area, a service cell different from a service cell of the network element of an access network.

706: The network element of an access network determines whether the first UE satisfies a preset condition of base station handover; and if yes, performs step 707.

It should be noted that the first UE may move, and may leave the target area, or UE having a better base station capability enters the target area for selection. The network element of an access network may hand over a base station, so that a user in the target area obtains a better service. When the first UE does not satisfy the preset condition of base station handover, the first UE continues providing a communication service for the user in the target area by using the base station function.

The network element of an access network may determine, in multiple manners, whether the first UE satisfies the preset condition of base station handover, and the following manner is specifically used for implementation:

Optionally, in another embodiment of the communication method in this embodiment of the present invention, the network element of an access network determines whether second UE whose base station capability is superior to a base station capability of the first UE exists; and if yes, determines that the first UE satisfies the preset condition of base station handover. Specifically, when the network element of an access network determines that the second UE whose base station capability is superior to the base station capability of the first UE exists, it indicates that better UE exists for selection. The network element of an access network may start a handover process, to activate a base station function of the UE having a better base station capability.

Optionally, in another embodiment of the communication method in this embodiment of the present invention, the network element of an access network determines whether a distance between the first UE and a center of the target area exceeds a third preset distance; and if yes, determines that the first UE satisfies the preset condition of base station handover.

In this embodiment, the third preset distance may be a maximum or minimum distance between a boundary and the center of the target area, or may be equal to a second preset distance, or may be another value. This is not limited herein. When the network element of an access network determines that the distance between the first UE and the center of the target area exceeds the third preset distance, it indicates that the first UE is to leave the target area, or has left the target area, and the network element of an access network needs to further select UE to provide a service for the user in the target area.

It should be noted that the network element of an access network may determine, in another manner, whether the first UE satisfies the preset condition of base station handover. For example, the network element of an access network determines whether a minimum distance between the first UE and the target area is greater than a preset leaving distance. Due to limited space of content, this is not listed one by one herein.

707: The network element of an access network selects, according to measurement information, UE having an optimal base station capability from remaining UE as second UE, where the remaining UE is other UE in the at least one UE than the first UE.

When there is one remaining UE, the network element of an access network may select the UE as the second UE.

When there are multiple remaining UEs, the network element of an access network selects, according to the measurement information, the UE having the optimal base station capability from the remaining UE as the second UE, where the remaining UE is other UE than the first UE.

708: The network element of an access network sends an activation message to the second UE, to activate a base station function of the second UE.

Step 708 is similar to step 705, and details are not described herein again.

709: The network element of an access network sends a handover control message to the first UE, so that the first UE hands over a user in a first cell from the first cell to a second cell according to the handover control message, where the first cell corresponds to the first UE, and the second cell corresponds to the second UE.

In this embodiment, the network element of an access network may hand over the user in the first cell from the first cell to the second cell in multiple manners, and the following manner is specifically used for implementation:

Optionally, in another embodiment of the communication method in this embodiment of the present invention, when a base station configuration parameter of the first UE is the same as a base station configuration parameter of the second UE, the handover control message is used to start a soft handover process by the first UE. Specifically, in the handover process, a user in the target area maintains a communication connection to both the second UE and the first UE, and disconnects from the first UE after establishing stable communication with the second UE. Therefore, continuity of information transmission in the handover process can be ensured, a call drop rate can be reduced, the user can not feel the handover, and compared with hard handover, user experience can be improved.

When a base station configuration parameter of the first UE is different from a base station configuration parameter of the second UE, the handover control message is used to start a hard handover process by the first UE. Specifically, after cell handover is completed, the second UE provides a service for a user in the target area. The second cell is a primary cell, and the base station configuration parameter of the second UE is used as a parameter of the primary cell. The first cell serves as a secondary cell, and the base station configuration parameter of the first UE is used as a parameter of the secondary cell.

710: The network element of an access network receives a handover complete message sent by the first UE.

After the first UE and the second UE complete handover, the first UE sends the handover complete message to the network element of an access network, and the network element of an access network may receive the handover complete message sent by the first UE.

711: The network element of an access network sends a deactivation message to the first UE, so that the first UE deactivates the base station function of the first UE according to the deactivation message.

After the network element of an access network receives the handover complete message, the first UE may still provide a service for a user in the target area if the first UE is still located in the target area, and may generate a signal collision with the second UE. Therefore, the base station function of the first UE needs to be deactivated.

It may be understood that after being deactivated according to the deactivation message, the first UE cannot continue using the base station function, and waits to be reactivated.

712: If a minimum distance between the first UE and the target area is greater than or equal to a second preset distance, the network element of an access network sends a clear instruction to the first UE, so that the first UE clears a configuration parameter of the first UE according to the clear instruction.

The second preset distance may be equal to the first preset distance, or may be not equal to the first preset distance. A specific value is not limited herein. If the minimum distance between the first UE and the target area is greater than or equal to the second preset distance, it indicates that the first UE has left the target area, and cannot provide a relatively good communication service for a user in the target area. After clearing the configuration parameter of the first UE, the first UE becomes UE not carrying the configuration parameter. It should be noted that after receiving the clear instruction, the first UE may delay clearing the configuration parameter of the first UE, and a delay time may be adjusted according to an actual case. This is not limited herein.

It should be noted that according to the communication method provided in the present invention, a logical base station exists in the target area, and UE providing a base station service for a user in the target area can be changed constantly.

During actual application, if the handover process does not need to be performed, step 706 to step 711 may not be performed. If the configuration parameter does not need to be cleared, step 712 may not be performed. This is not limited herein.

A network element of an access network determines a target area; determines first UE in at least one UE, where the at least one UE has a base station capability, and the at least one UE is located in the target area, or a minimum distance between the at least one UE and the target area is less than a preset threshold; and sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

Next, the present invention provides a specific implementation process of using UE having a base station capability in a hotspot area as a base station, thereby improving feasibility of the solution.

Further, the present invention provides a specific implementation process of handover between UEs having a base station capability in the hotspot area, so that UE having an optimal capability always exists in the hotspot area to provide a base station service for the hotspot area, thereby improving feasibility of the solution.

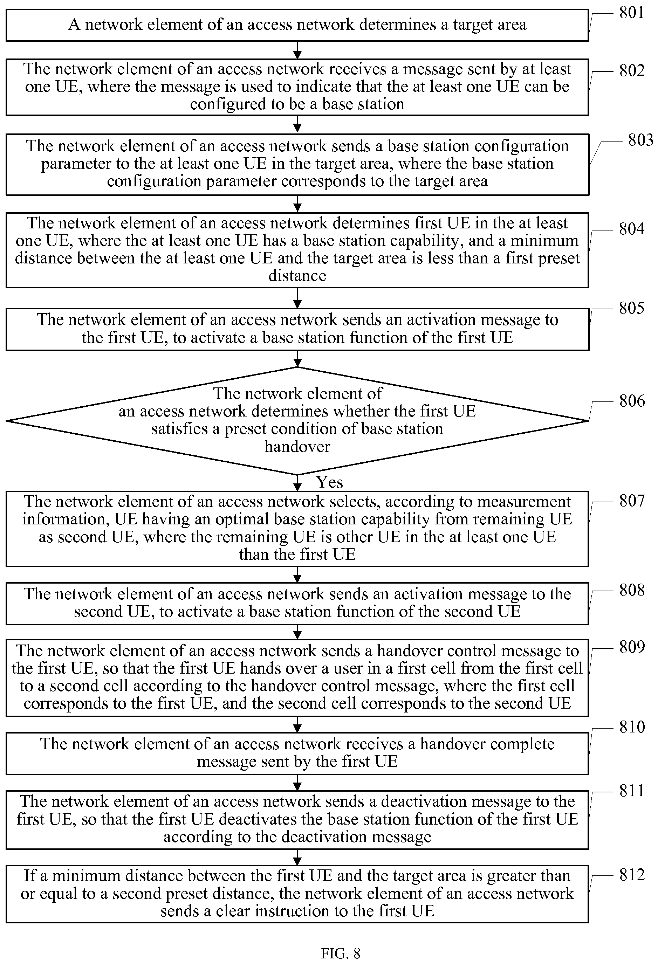

Second, the target area is a network coverage hole. Referring to FIG. 8, another embodiment of a communication method according to embodiments of the present invention includes the following steps.

801: A network element of an access network determines a target area.

In this embodiment, the target area is a network coverage hole. The network coverage hole is a geographic area in which communication cannot be performed due to a condition limitation and that is within network coverage of the network element of an access network. When needing to provide a network service for the target area, the network element of an access network may search for and determine the target area by using a location server.

Optionally, in another embodiment of the communication method in this embodiment of the present invention, the method further includes: respectively collecting, by the network element of an access network, statistics on traffic of each area in a preset time period. The determining, by a network element of an access network, a target area is implemented in the following manner: determining, by the network element of an access network, an area corresponding to traffic less than second preset traffic as the target area.

In this embodiment, the second preset traffic is traffic in an offline state. The network element of an access network may determine whether traffic of an area is less than the second preset traffic; if yes, it indicates that there are a very small quantity of network requests from the area, and the area may have no network signal and needs a network service; and if not, it indicates that a network in the area has a network signal. The second preset traffic may be set according to an actual case. A specific value is not limited herein.

802: The network element of an access network receives a message sent by at least one UE, where the message is used to indicate that the at least one UE can be configured to be a base station.

Step 802 is similar to step 702 in the embodiment shown in FIG. 7, and details are not described herein again. Step 802 and step 801 are not limited to a fixed sequence, and an execution sequence is not limited herein.

803: The network element of an access network sends a base station configuration parameter to the at least one UE, where the base station configuration parameter corresponds to the target area.

The network element of an access network may send the base station configuration parameter to the at least one UE. The at least one UE configures, according to the base station configuration parameter, the at least one UE to be UE having a base station capability, and waits to be activated.

It should be noted that the network element of an access network may acquire and determine information such as a location, a speed, and a moving direction of the UE by using the location server, and determine, according to a location and a moving direction of target UE, whether the target UE is ready to enter the target area. A value of a first preset distance may be set according to a time that the UE configures, according to the base station configuration parameter, the UE to be the UE having the base station capability or according to the moving speed of the target UE, or may be determined according to actual measurement. This is not limited herein.

In this embodiment, the sending, by the network element of an access network, a base station configuration parameter to the at least one UE may be implemented in multiple manners, and may be specifically implemented in the following manner:

Optionally, in another embodiment of the communication method in this embodiment of the present invention, the network element of an access network sends the base station configuration parameter to the at least one UE by means of area broadcast.

Optionally, in another embodiment of the communication method in this embodiment of the present invention, the network element of an access network sends the base station configuration parameter to the at least one UE in a multicast manner.

Optionally, in another embodiment of the communication method in this embodiment of the present invention, the network element of an access network sends the base station configuration parameter to the at least one UE in a P2P manner.

Optionally, in another embodiment of the communication method in this embodiment of the present invention, the network element of an access network sends a parameter transmission control message to UE carrying the base station configuration parameter, so that the UE carrying the base station configuration parameter sends the base station configuration parameter to the at least one UE according to the parameter transmission control message.

804: The network element of an access network determines first UE in the at least one UE, where the at least one UE has a base station capability, and a minimum distance between the at least one UE and the target area is less than a first preset distance.

When the minimum distance between the at least one UE and the target area is less than the first preset distance, the network element of an access network determines the first UE in the at least one UE. The at least one UE has the base station capability, and the minimum distance between the at least one UE and the target area is less than the first preset distance.

It should be noted that step 804 and step 802 and step 803 are not limited to a fixed sequence. This is not limited herein.

805: The network element of an access network sends an activation message to the first UE, to activate a base station function of the first UE.

It should be noted that after being activated, the first UE may enter the target area, and provide a service for a user in the target area. A specific process of sending the activation message to the first UE by the network element of an access network is similar to step 705 in the embodiment shown in FIG. 7, and details are not described herein again.

806: The network element of an access network determines whether the first UE satisfies a preset condition of base station handover; and if yes, performs step 807.

807: The network element of an access network selects, according to measurement information, UE having an optimal base station capability from remaining UE as second UE, where the remaining UE is other UE in the at least one UE than the first UE.

It should be noted that a minimum distance between the remaining UE and the target area is less than the first preset distance.

808: The network element of an access network sends an activation message to the second UE, to activate a base station function of the second UE.

809: The network element of an access network sends a handover control message to the first UE, so that the first UE hands over a user in a first cell from the first cell to a second cell according to the handover control message, where the first cell corresponds to the first UE, and the second cell corresponds to the second UE.

Optionally, in another embodiment of the communication method in this embodiment of the present invention, when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

810: The network element of an access network receives a handover complete message sent by the first UE.

811: The network element of an access network sends a deactivation message to the first UE, so that the first UE deactivates the base station function of the first UE according to the deactivation message.

812: If a minimum distance between the first UE and the target area is greater than or equal to a second preset distance, the network element of an access network sends a clear instruction to the first UE, so that the first UE clears a configuration parameter of the first UE according to the clear instruction.

Step 806 to step 812 are similar to step 706 to step 712 in the embodiment shown in FIG. 7, and details are not described herein again.

A network element of an access network determines a target area; determines first UE in at least one UE, where the at least one UE has a base station capability, and the at least one UE is located in the target area, or a minimum distance between the at least one UE and the target area is less than a preset threshold; and sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

For ease of understanding, the communication method in this embodiment of the present invention is described below in detail by using a specific application scenario.

In the specific application scenario of this embodiment of the present invention, a network element of a core network is an MME, the network element of an access network is an ENB, the first UE and the second UE are communications vehicles, and the target area is a network coverage hole. The network coverage hole is a circular area, and a radius of a circle is 2 km. The first preset distance is 500 m, the base station configuration parameter being ("081", "2555 Mbps to 2560 Mbps", "5 Mbps") is used as an example, UE carrying the base station configuration parameter is a mobile phone 01, a serving cell of a communications vehicle A is the first cell, a serving cell of a communications vehicle B is the second cell, and a serving cell of a communications vehicle F is a third cell.

The ENB determines the network coverage hole by using the location server.

The ENB receives a message sent by the communications vehicle A. The communications vehicle A notifies the ENB by using the message that the communications vehicle A can be configured to be a base station.

The base station configuration parameter being ("081", "2555 Mbps to 2560 Mbps", "5 Mbps") is used as an example. "081" is a cell ID, "2555 Mbps to 2560 Mbps" is a frequency band, and "5 Mbps" is a bandwidth. When a minimum distance between the communications vehicle A and the network coverage hole is less than 500 m, the ENB sends the base station configuration parameter to the communications vehicle A by means of area broadcast; or
the ENB sends the base station configuration parameter to the communications vehicle A in the network coverage hole in a point to point P2P manner; or
the mobile phone 1 is located outside the network coverage hole, the ENB sends the parameter transmission control message to the mobile phone 1, and the mobile phone 1 sends the base station configuration parameter to the communications vehicle in the network coverage hole by means of WiFi, microwave, or the like.

After receiving ("081", "2555 Mbps to 2560 Mbps", "5 Mbps"), the communications vehicle A configures, according to the configuration parameter, the communications vehicle A to be the UE having the base station capability, and waits to be activated.

When the communications vehicles A, B, and C are located outside the network coverage hole, and a distance between the network coverage hole and each of the communications vehicles A, B, and C is less than 500 m, the ENB receives measurement information sent by the communications vehicles A, B, and C. Assuming that the measurement information is that a moving speed of the communications vehicle A is 30 km/h, a moving speed of the communications vehicle B is 45 km/h, and a moving speed of the communications vehicle is 50 km/h, the base station capability of the communications vehicle A is optimal, and the ENB determines the communications vehicle A as the first UE.

The ENB sends an activation message to the communications vehicle A. The communications vehicle A receives the activation message, and activates a base station function of the communications vehicle A according to the activation message. The communications vehicle A moves to the network coverage hole, and provides a service for a user in the network coverage hole.

Optionally, when a distance between the communications vehicle A and a center of the network coverage hole is greater than 2 km, and a distance between each of a communications vehicle D and a communications vehicle E and the network coverage hole is less than 500 m, assuming that moving speeds of the communications vehicles D and E are both 45 km/h, a data rate supported by the communications vehicle D is 1 Mbps, and a data rate supported by the communications vehicle E is 500 Kbps, it indicates that a base station capability of the communications vehicle D is superior to that of the communications vehicle E. The ENB selects, according to the measurement information, the communications vehicle D, as the second UE, from the communications vehicles D and E, and sends an activation message to the communications vehicle D. The communications vehicle D activates a base station function of the communications vehicle D according to the activation message.

The ENB sends a handover control message to the communications vehicle A. The communications vehicle A sends a cell handover command to a user in the first cell, to perform soft handover from the first cell to the second cell on a user served by the communications vehicle A. When a configuration parameter of the communications vehicle D is the same as a configuration parameter of the communications vehicle A, the ENB starts a soft handover process, to hand over the user of the communications vehicle A from the first cell to the second cell.

Optionally, if detecting that a base station capability of the communications vehicle F is superior to the base station capability of the communications vehicle A, the ENB sends an activation message to the communications vehicle F, to activate a base station function of the communications vehicle F.

The ENB sends a handover control message to the communications vehicle A and the communications vehicle F. The communications vehicle A sends a cell handover command to a user in the first cell, to perform soft handover from the first cell to the third cell on a user served by the communications vehicle A. When a configuration parameter of the communications vehicle F is the same as a configuration parameter of the communications vehicle A, the ENB starts a soft handover process, to hand over the user served by the communications vehicle A from the first cell to the third cell.

The ENB sends a deactivation message to the communications vehicle A, and the communications vehicle A becomes UE carrying the base station configuration parameter.

If the distance between the communications vehicle A and the target area is greater than 2 km, the ENB sends a clear instruction to the communications vehicle A. After receiving the clear instruction, the communications vehicle A clears the base station configuration parameter of the communications vehicle A according to the clear instruction.

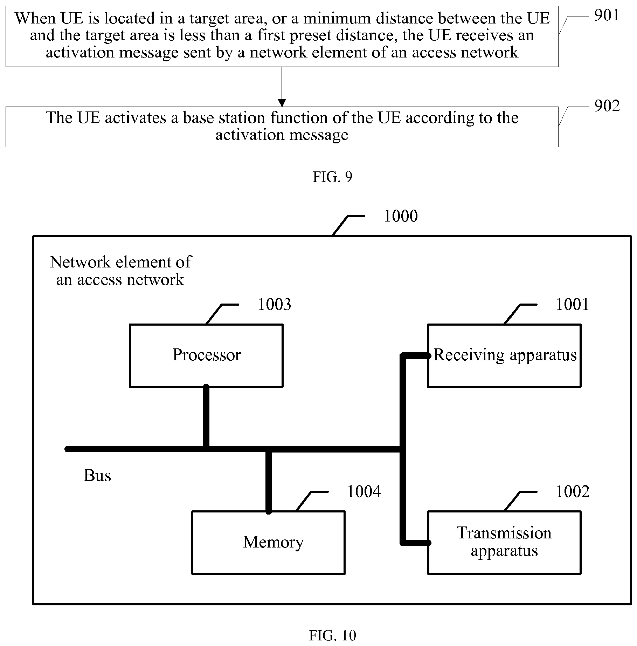

Referring to FIG. 9, another embodiment of a communication method according to embodiments of the present invention includes the following steps.

901: When UE is located in a target area, or a minimum distance between the UE and the target area is less than a first preset distance, the UE receives an activation message sent by a network element of an access network.

The target area is determined by the network element of an access network, and the UE has a base station capability. When the UE is located in the target area, or the minimum distance between the UE and the target area is less than the first preset distance, the network element of an access network may send the activation message to the UE, and the UE may receive the activation message.

The UE may be a communications vehicle for which a base station configuration parameter is configured, or may be another device. This is not limited herein.

902: The UE activates a base station function of the UE according to the activation message.

After receiving the activation message, the UE activates the base station function of the UE according to the activation message, feeds back an activation success message to the network element of an access network, establishes a communication connection to a network element of a core network by using the network element of an access network, and provides a service for a user by using the base station function.

Optionally, based on the embodiment shown in FIG. 9, in another embodiment of the communication method in this embodiment of the present invention, the UE sends a message to the network element of an access network, receives a base station configuration parameter sent by the network element of an access network, and configures, according to the base station configuration parameter, the UE to be UE having a base station capability.

In this embodiment, the message is used to indicate that the UE can be configured to be a base station. The network element of an access network sends the base station configuration parameter to the UE in response to the message. After receiving the base station configuration parameter, the UE configures, according to the base station configuration parameter, the UE to be the UE having the base station capability, and waits to be activated.

Optionally, based on the embodiment shown in FIG. 9, in another embodiment of the communication method in this embodiment of the present invention, the method further includes: obtaining, by the UE, measurement information, and sending the measurement information to the network element of an access network.

In this embodiment, the UE may measure the base station capability of the UE to obtain the measurement information, and send the measurement information to the network element of an access network. The measurement information includes at least one of an interference signal of another base station, device security of the UE, a moving speed, a signal processing capability, a battery level, a supported data rate, or an uplink/downlink penalty, or may further include other information. This is not specifically limited herein. A weaker interference signal of another base station, higher device security, a lower moving speed, a stronger signal processing capability, a higher battery level, a higher supported data rate, or a lower uplink/downlink penalty indicates a better base station capability of the UE, and when serving as a base station, the UE may provide a better service for a user; otherwise, the UE may provide a poorer service for the user.

Optionally, based on the embodiment shown in FIG. 9, in another embodiment of the communication method in this embodiment of the present invention, after the activating, by the UE, a base station function of the UE according to the activation message, the method includes:
receiving, by the UE, a handover control message sent by the network element of an access network, and sending, according to the handover control message, a cell handover command to a user served by the UE. Specifically, during handover between the UE and another UE, after the UE sends the cell handover command to the user served by the UE, the user served by the UE may be handed over with a user served by the another UE. After user handover is completed, the configuration parameter of the UE becomes to a parameter of a secondary cell, so that a cell corresponding to the UE changes to the secondary cell from a primary cell. For a specific process of the handover between the UE and the another UE, refer to a process of base station handover in the prior art, and details are not described herein.

The UE sends a handover complete message to the network element of an access network. Specifically, after the UE sends the handover complete message to the network element of an access network, the network element of an access network may send a deactivation message to the UE.

The UE receives the deactivation message sent by the network element of an access network, and deactivates the base station function of the UE according to the deactivation message. Specifically, the UE deactivates the base station function of the UE according to the deactivation message, and becomes UE carrying the configuration parameter.

Optionally, based on the embodiment shown in FIG. 9 or the optional embodiment, in another embodiment of the communication method in this embodiment of the present invention, after the activating, by the UE, a base station function of the UE according to the activation message, the method includes: receiving, by the UE, a clear instruction sent by the network element of an access network, and clearing the configuration parameter of the UE according to the clear instruction.

When the network element of an access network detects that the minimum distance between the UE and the target area is greater than or equal to a second preset distance, the UE receives the clear instruction sent by the network element of an access network, and clears the base station configuration parameter of the UE according to the clear instruction. It may be understood that after receiving the clear instruction, the UE may delay clearing the base station configuration parameter of the UE. A delay time may be set according to an actual case.

A network element of an access network determines a target area; determines first UE in at least one UE, where the at least one UE has a base station capability, and the at least one UE is located in the target area, or a minimum distance between the at least one UE and the target area is less than a preset threshold; and sends an activation message to the first UE, to activate a base station function of the first UE, so that the first UE provides a service for a user in the target area by using the base station function. By means of the present invention, UE having a base station capability in a target area may be used as a base station, and a user in the target area may be connected to a network by using an existing resource. Therefore, costs of disposing a micro base station or a pico base station are saved.

An embodiment of the present invention provides a hardware structure of a network element of an access network. Referring to FIG. 10, the network element of an access network includes: at least one receiving apparatus 1001, at least one transmission apparatus 1002, at least one processor 1003, and at least one memory 1004. The receiving apparatus 1001, the transmission apparatus 1002, the processor 1003, and the memory 1004 are connected by using a bus. One receiving apparatus 1001, one transmission apparatus 1002, one processor 1003, and one memory 1004 are used as an example in FIG. 10.

The receiving apparatus 1001 is configured to receive data and a control instruction.

The transmission apparatus 1002 is configured to send the data and the control instruction.

The processor 1003 is configured to execute a program stored in the memory. Specifically, the processor may be a central processing unit (CPU, Central Processing Unit), or an application-specific integrated circuit (ASIC, Application Specific Integrated Circuit), or may be one or more integrated circuits configured to implement this embodiment of the present invention.

The memory 1004 is configured to store the program and the instruction. Specifically, the program may include program code, and the program code includes a computer operation instruction. The memory may include a high-speed RAM memory, or may include a non-volatile memory (non-volatile memory), for example, at least one magnetic disk storage.

The network element of an access network in this embodiment of the present invention is described below in detail with reference to hardware. Referring to FIG. 10, an embodiment of a network element of an access network according to embodiments of the present invention includes:
a receiving apparatus 1001, a transmission apparatus 1002, a processor 1003, and a memory 1004, where the processor 1003 and the memory 1004 receive external information of the network element of an access network by using the receiving apparatus 1001, and the processor 1003 and the memory 1004 transmit information to an exterior of the network element of an access network by using the transmission apparatus 1002.

The memory 1004 stores an activation message.

The processor 1003 is configured to determine a target area.

The processor 1003 is further configured to determine first UE in at least one UE, where the at least one UE has a base station capability, and the at least one UE is located in the target area, or a minimum distance between the at least one UE and the target area is less than a first preset distance.

The transmission apparatus 1002 is configured to send the activation message to the first UE, to activate a base station function of the first UE.

The memory 1004 is configured to store a message and a base station configuration parameter.

The receiving apparatus 1001 is configured to receive the message sent by the at least one UE, where the message is used to indicate that the at least one UE can be configured to be a base station.

The transmission apparatus 1002 is further configured to send the base station configuration parameter to the at least one UE, so that the at least one UE configures, according to the base station configuration parameter, the at least one UE to be UE having the base station capability, where the base station configuration parameter corresponds to the target area.

That the processor 1003 is configured to determine first UE in at least one UE is specifically implemented in the following manner:
the processor 1003 is further configured to: receive measurement information sent by the at least one UE; and determine, according to the measurement information, UE having an optimal base station capability in the at least one UE as the first UE.

That the transmission apparatus 1002 is configured to send the base station configuration parameter to the at least one UE is specifically implemented in the following manner:
the transmission apparatus 1002 is configured to send the base station configuration parameter to the at least one UE by means of area broadcast; or
the transmission apparatus 1002 is configured to send the base station configuration parameter to the at least one UE in a multicast manner; or
the transmission apparatus 1002 is configured to send the base station configuration parameter to the at least one UE in a point to point P2P manner; or
the transmission apparatus 1002 is configured to send a parameter transmission control message to UE carrying the base station configuration parameter, so that the UE carrying the base station configuration parameter sends the base station configuration parameter to the at least one UE according to the parameter transmission control message.

The processor 1003 is further configured to respectively collect statistics on traffic of each area in a preset time period.

That the processor 1003 is configured to determine a target area is specifically implemented in the following manner:
the processor 1003 is configured to determine an area corresponding to traffic greater than first preset traffic as the target area; or
the processor 1003 is configured to determine an area corresponding to traffic less than second preset traffic as the target area.

The memory 1004 further stores a clear instruction.

The transmission apparatus 1002 is further configured to: if a minimum distance between the first UE and the target area is greater than or equal to a second preset distance, send the clear instruction to the first UE, so that the first UE clears a configuration parameter of the first UE according to the clear instruction.

The processor 1003 is further configured to: determine whether the first UE satisfies a preset condition of base station handover; and if yes, determine, according to the measurement information, that UE having an optimal base station capability in remaining UE is second UE, where the remaining UE is other UE in the at least one UE than the first UE.

The transmission apparatus 1002 is further configured to send the activation message to the second UE, to activate a base station function of the second UE.

The transmission apparatus 1002 is further configured to send a handover control message to the first UE, so that the first UE hands over a user in a first cell from the first cell to a second cell according to the handover control message, where the first cell corresponds to the first UE, and the second cell corresponds to the second UE.

The receiving apparatus 1001 is further configured to receive a handover complete message sent by the first UE.

The transmission apparatus 1002 is further configured to send a deactivation message to the first UE, so that the first UE deactivates the base station function of the first UE according to the deactivation message.

That the processor 1003 is configured to determine whether the first UE satisfies a preset condition of base station handover is specifically implemented in the following manner:
the processor 1003 is configured to: determine whether the second UE whose base station capability is superior to the base station capability of the first UE exists in the remaining UE; and if yes, determine that the first UE satisfies the preset condition of base station handover.

That the processor 1003 is configured to determine whether the first UE satisfies a preset condition of base station handover is specifically implemented in the following manner:

The processor 1003 is configured to: determine whether a distance between the first UE and a center of the target area exceeds a preset distance; and if yes, determine that the first base station satisfies the preset condition of base station handover.

When a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

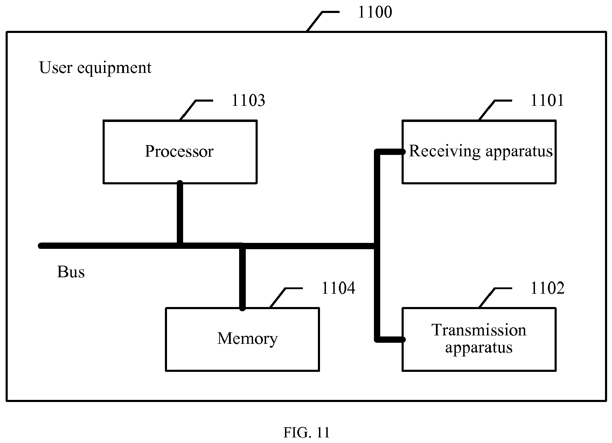

An embodiment of the present invention provides a hardware structure of UE. Referring to FIG. 11, the UE includes: at least one receiving apparatus 1111, at least one transmission apparatus 1102, at least one processor 1113, and at least one memory 1114. The receiving apparatus 1101, the transmission apparatus 1102, the processor 1103, and the memory 1104 are connected by using a bus. One receiving apparatus 1101, one transmission apparatus 1102, one processor 1103, and one memory 1104 are used as an example in FIG. 11.

The receiving apparatus 1101 is configured to receive data and a control instruction.

The transmission apparatus 1102 is configured to send the data and the control instruction.

The processor 1103 is configured to execute a program stored in the memory. Specifically, the processor may be a central processing unit CPU, or an ASIC, or may be one or more integrated circuits configured to implement this embodiment of the present invention.

The memory 1104 is configured to store the program and the instruction. Specifically, the program may include program code, and the program code includes a computer operation instruction. The memory may include a high-speed RAM memory, or may include a non-volatile memory (non-volatile memory), for example, at least one magnetic disk storage.

The UE in this embodiment of the present invention is described below in detail with reference to hardware. Referring to FIG. 11, an embodiment of UE according to embodiments of the present invention includes:
a receiving apparatus 1101, a transmission apparatus 1102, a processor 1103, and a memory 1104, where the processor 1103 and the memory 1104 receive external information of a network element of an access network by using the receiving apparatus 1101, and the processor 1103 and the memory 1104 transmit information to an exterior of the network element of an access network by using the transmission apparatus 1102.

The receiving apparatus 1101 is configured to: when the UE is located in a target area, or a minimum distance between the UE and the target area is less than a first preset distance, receive an activation message sent by the network element of an access network.

The memory 1104 is configured to store the activation message.

The processor 1103 is configured to activate a base station function of the UE according to the activation message.

The memory 1104 is further configured to store a message and a base station configuration parameter.

The transmission apparatus 1102 is configured to send the message to the network element of an access network, where the message is used to indicate that the UE can be configured to be a base station.

The receiving apparatus 1101 is further configured to receive the base station configuration parameter sent by the network element of an access network.

The processor 1103 is further configured to configure, according to the base station configuration parameter, the UE to be UE having a base station capability.

The memory 1104 further stores measurement information.

The processor 1103 is used for the measurement information.

The transmission apparatus 1102 is configured to send the measurement information to the network element of an access network.

The memory 1104 is further configured to store a handover control message, a cell handover command, a handover complete message, and a deactivation message.

The receiving apparatus 1101 is further configured to receive the handover control message sent by the network element of an access network.

The transmission apparatus 1102 is further configured to send, according to the handover control message, the cell handover command to a user served by the UE.

The transmission apparatus 1102 is further configured to send the handover complete message to the network element of an access network.

The receiving apparatus 1101 is further configured to receive the deactivation message sent by the network element of an access network.

The processor 1103 is configured to deactivate the base station function of the UE according to the deactivation message.

The memory 1104 is further configured to store a clear instruction.

The receiving apparatus 1101 is further configured to receive the clear instruction sent by the network element of an access network.

The processor 1103 is further configured to clear a configuration parameter of the UE according to the clear instruction.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A network element of an access network, comprising:
a determining module, configured to determine a target area, wherein
the determining module is further configured to determine first UE in at least one user equipment UE, wherein the at least one UE has a base station capability, and the at least one UE is located in the target area, or a minimum distance between the at least one UE and the target area is less than a first preset distance; and
a sending module, configured to send an activation message to the first UE, to activate a base station function of the first UE.

2. The network element of an access network according to claim 1, wherein the network element of an access network further comprises:
a first receiving module, configured to receive a message sent by the at least one UE, wherein the message is used to indicate that the at least one UE can be configured to be a base station, wherein
the sending module is further configured to send a base station configuration parameter to the at least one UE, so that the at least one UE configures, according to the base station configuration parameter, the at least one UE to be UE having the base station capability, wherein the base station configuration parameter corresponds to the target area.

3. The network element of an access network according to claim 1 or 2, wherein that the determining module is configured to determine first UE in at least one UE specifically comprises:
the determining module is configured to: receive measurement information sent by the at least one UE; and determine, according to the measurement information, UE having an optimal base station capability in the at least one UE as the first UE.

4. The network element of an access network according to claim 2, wherein that the sending module is configured to send a base station configuration parameter to the at least one UE specifically comprises:
the sending module is configured to send the base station configuration parameter to the at least one UE by means of area broadcast; or
the sending module is configured to send the base station configuration parameter to the at least one UE in a multicast manner; or
the sending module is configured to send the base station configuration parameter to the at least one UE in a point to point P2P manner; or
the sending module is configured to send a parameter transmission control message to UE carrying the base station configuration parameter, so that the UE carrying the base station configuration parameter sends the base station configuration parameter to the at least one UE according to the parameter transmission control message.

5. The network element of an access network according to any one of claims 1 to 4, wherein the network element of an access network further comprises:
a statistics collection module, configured to respectively collect statistics on traffic of each area in a preset time period.

6. The network element of an access network according to claim 5, wherein that a determining module is configured to determine a target area specifically comprises:
the determining module is configured to determine an area corresponding to traffic greater than first preset traffic as the target area; or
the determining module is configured to determine an area corresponding to traffic less than second preset traffic as the target area.

7. The network element of an access network according to claim 1 or 2, wherein
the sending module is further configured to: if a minimum distance between the first UE and the target area is greater than or equal to a second preset distance, send a clear instruction to the first UE, so that the first UE clears a configuration parameter of the first UE according to the clear instruction.

8. The network element of an access network according to claim 3, wherein the network element of an access network further comprises:
a judging module, configured to: determine whether the first UE satisfies a preset condition of base station handover; and if yes, trigger the determining module to determine, according to the measurement information, that UE having an optimal base station capability in remaining UE is second UE, wherein
the determining module is further configured to determine, according to the measurement information, the UE having an optimal base station capability in the remaining UE as the second UE, wherein the remaining UE is other UE in the at least one UE than the first UE;
the sending module is further configured to send an activation message to the second UE, to activate a base station function of the second UE; and
the sending module is further configured to send a handover control message to the first UE, so that the first UE hands over a user in a first cell from the first cell to a second cell according to the handover control message, wherein the first cell corresponds to the first UE, and the second cell corresponds to the second UE; and
the UE further comprises:
a second receiving module, further configured to receive a handover complete message sent by the first UE, wherein
the sending module is further configured to send a deactivation message to the first UE, so that the first UE deactivates the base station function of the first UE according to the deactivation message.

9. The network element of an access network according to claim 8, wherein
the judging module is specifically configured to: determine whether the second UE whose base station capability is superior to the base station capability of the first UE exists in the remaining UE; and if yes, determine that the first UE satisfies the preset condition of base station handover.

10. The network element of an access network according to claim 8, wherein
the judging module is specifically configured to: determine whether a distance between the first UE and a center of the target area exceeds a third preset distance; and if yes, determine that the first base station satisfies the preset condition of base station handover.

11. The network element of an access network according to claim 8, wherein
when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

12. User equipment UE, comprising:
a receiving module, configured to: when the UE is located in the target area, or a minimum distance between the UE and the target area is less than a first preset distance, receive an activation message sent by a network element of an access network; and
an activation module, configured to activate a base station function of the UE according to the activation message.

13. The UE according to claim 12, wherein the UE further comprises:
a sending module, configured to send a message to the network element of an access network, wherein the message is used to indicate that the UE can be configured to be a base station, wherein
the receiving module is further configured to receive a base station configuration parameter sent by the network element of an access network; and
the UE further comprises:
a configuration module, configured to configure, according to the base station configuration parameter, the UE to be UE having a base station capability.

14. The UE according to claim 12, wherein the UE further comprises:
an obtaining module, configured to obtain measurement information, wherein
the sending module is configured to send the measurement information to the network element of an access network.

15. The UE according to claim 12, wherein
the receiving module is further configured to receive a handover control message sent by the network element of an access network;
the sending module is further configured to send, according to the handover control message, a cell handover command to a user served by the UE;
the sending module is further configured to send a handover complete message to the network element of an access network;
the receiving module is further configured to receive a deactivation message sent by the network element of an access network; and
the UE further comprises:
a deactivation module, configured to deactivate the base station function of the UE according to the deactivation message.

16. The UE according to any one of claims 12 to 15, wherein
the receiving module is configured to receive a clear instruction sent by the network element of an access network; and
the UE further comprises:
a clear module, configured to clear a configuration parameter of the UE according to the clear instruction.

17. A communication method, comprising:
determining, by a network element of an access network, a target area;
determining, by the network element of an access network, first UE in at least one user equipment UE, wherein the at least one UE has a base station capability, and the at least one UE is located in the target area, or a minimum distance between the at least one UE and the target area is less than a first preset distance; and
sending, by the network element of an access network, an activation message to the first UE, to activate a base station function of the first UE.

18. The communication method according to claim 17, wherein the method further comprises:
receiving, by the network element of an access network, a message sent by the at least one UE, wherein the message is used to indicate that the at least one UE can be configured to be a base station; and
sending, by the network element of an access network, a base station configuration parameter to the at least one UE, so that the at least one UE configures, according to the base station configuration parameter, the at least one UE to be UE having the base station capability, wherein the base station configuration parameter corresponds to the target area.

19. The communication method according to claim 17 or 18, wherein the determining, by the network element of an access network, first UE in at least one UE comprises:
receiving, by the network element of an access network, measurement information sent by the at least one UE; and
determining, by the network element of an access network according to the measurement information, UE having an optimal base station capability in the at least one UE as the first UE.

20. The communication method according to claim 18, wherein the sending, by the network element of an access network, a base station configuration parameter to the at least one UE comprises:
sending, by the network element of an access network, the base station configuration parameter to the at least one UE by means of area broadcast; or
sending, by the network element of an access network, the base station configuration parameter to the at least one UE in a multicast manner; or
sending, by the network element of an access network, the base station configuration parameter to the at least one UE in a point to point P2P manner; or
sending, by the network element of an access network, a parameter transmission control message to UE carrying the base station configuration parameter, so that the UE carrying the base station configuration parameter sends the base station configuration parameter to the at least one UE according to the parameter transmission control message.

21. The communication method according to any one of claims 18 to 20, wherein the method further comprises:
respectively collecting, by the network element of an access network, statistics on traffic of each area in a preset time period.

22. The communication method according to claim 21, wherein the determining, by a network element of an access network, a target area comprises:
determining, by the network element of an access network, an area corresponding to traffic greater than first preset traffic as the target area; or
determining, by the network element of an access network, an area corresponding to traffic less than second preset traffic as the target area.

23. The communication method according to claim 17 or 18, wherein after the sending, by the network element of an access network, an activation message to the first UE, the method comprises:
if a minimum distance between the first UE and the target area is greater than or equal to a second preset distance, sending, by the network element of an access network, a clear instruction to the first UE, so that the first UE clears a base station configuration parameter of the first UE according to the clear instruction.

24. The communication method according to claim 19, wherein after the sending, by the network element of an access network, an activation message to the first UE, the method comprises:
determining, by the network element of an access network, whether the first UE satisfies a preset condition of base station handover; and if yes, determining, according to the measurement information, that UE having an optimal base station capability in remaining UE is second UE, wherein the remaining UE is other UE in the at least one UE than the first UE;
sending, by the network element of an access network, an activation message to the second UE, to activate a base station function of the second UE;
sending, by the network element of an access network, a handover control message to the first UE, so that the first UE hands over a user in a first cell from the first cell to a second cell according to the handover control message, wherein the first cell corresponds to the first UE, and the second cell corresponds to the second UE;
receiving, by the network element of an access network, a handover complete message sent by the first UE; and
sending, by the network element of an access network, a deactivation message to the first UE, so that the first UE deactivates the base station function of the first UE according to the deactivation message.

25. The communication method according to claim 24, wherein the determining, by the network element of an access network, whether the first UE satisfies a preset condition of base station handover comprises:
determining, by the network element of an access network, whether the second UE whose base station capability is superior to the base station capability of the first UE exists in the remaining UE; and if yes, determining that the first UE satisfies the preset condition of base station handover.

26. The communication method according to claim 24, wherein the determining, by the network element of an access network, whether the first UE satisfies a preset condition of base station handover comprises:
determining, by the network element of an access network, whether a distance between the first UE and a center of the target area exceeds a third preset distance; and if yes, determining that the first base station satisfies the preset condition of base station handover.

27. The communication method according to claim 24, wherein
when a base station configuration parameter of the first UE is the same as a base station configuration parameter of the second UE, the handover control message is used to start a soft handover process by the first UE; or
when a base station configuration parameter of the first UE is different from a base station configuration parameter of the second UE, the handover control message is used to start a hard handover process by the first UE.

28. A communication method, comprising:
when user equipment UE is located in the target area, or a minimum distance between the UE and the target area is less than a first preset distance, receiving, by the UE, an activation message sent by a network element of an access network, wherein the UE has a base station capability; and
activating, by the UE, a base station function of the UE according to the activation message.

29. The communication method according to claim 28, wherein the method further comprises:
sending, by the UE, a message to the network element of an access network, wherein the message is used to indicate that the UE can be configured to be a base station;
receiving, by the UE, a base station configuration parameter sent by the network element of an access network; and
configuring, by the UE according to the base station configuration parameter, the UE to be UE having the base station capability.

30. The communication method according to claim 28, wherein the method further comprises:
obtaining, by the UE, measurement information; and
sending, by the UE, the measurement information to the network element of an access network.

31. The communication method according to claim 28, wherein after the activating, by the UE, a base station function of the UE according to the activation message, the method comprises:
receiving, by the UE, a handover control message sent by the network element of an access network;
sending, by the UE according to the handover control message, a cell handover command to a user served by the UE;
sending, by the UE, a handover complete message to the network element of an access network;
receiving, by the UE, a deactivation message sent by the network element of an access network; and
deactivating, by the UE, the base station function of the UE according to the deactivation message.

32. The communication method according to any one of claims 28 to 31, wherein after the activating, by the UE, a base station function of the UE according to the activation message, the method comprises:
receiving, by the UE, a clear instruction sent by the network element of an access network; and
clearing, by the UE, a configuration parameter of the UE according to the clear instruction.

33. A network element of an access network, comprising:
a receiving apparatus, a transmission apparatus, a processor, and a memory, wherein the processor and the memory receive external information of the network element of an access network by using the receiving apparatus, the processor and the memory transmit information to an exterior of the network element of an access network by using the transmission apparatus, and the memory stores an activation message;
the processor is configured to determine a target area;
the processor is further configured to determine first UE in at least one user equipment UE, wherein the at least one UE has a base station capability, and the at least one UE is located in the target area, or a minimum distance between the at least one UE and the target area is less than a first preset distance; and
the transmission apparatus is configured to send the activation message to the first UE, to activate a base station function of the first UE.

34. The network element of an access network according to claim 33, wherein the memory is configured to store a message and a base station configuration parameter;
the receiving apparatus is configured to receive the message sent by the at least one UE, wherein the message is used to indicate that the at least one UE can be configured to be a base station; and
the transmission apparatus is further configured to send the base station configuration parameter to the at least one UE, so that the at least one UE configures, according to the base station configuration parameter, the at least one UE to be UE having the base station capability, wherein the base station configuration parameter corresponds to the target area.

35. The network element of an access network according to claim 33 or 34, wherein that the processor is configured to determine first UE in at least one UE specifically comprises:
the processor is further configured to: receive measurement information sent by the at least one UE; and determine, according to the measurement information, UE having an optimal base station capability in the at least one UE as the first UE.

36. The network element of an access network according to claim 34, wherein that the transmission apparatus is configured to send the base station configuration parameter to the at least one UE specifically comprises:
the transmission apparatus is configured to send the base station configuration parameter to the at least one UE by means of area broadcast; or
the transmission apparatus is configured to send the base station configuration parameter to the at least one UE in a multicast manner; or
the transmission apparatus is configured to send the base station configuration parameter to the at least one UE in a point to point P2P manner; or
the transmission apparatus is configured to send a parameter transmission control message to UE carrying the base station configuration parameter, so that the UE carrying the base station configuration parameter sends the base station configuration parameter to the at least one UE according to the parameter transmission control message.

37. The network element of an access network according to any one of claims 33 to 36, wherein
the processor is further configured to respectively collect statistics on traffic of each area in a preset time period.

38. The network element of an access network according to claim 37, wherein that the processor is configured to determine a target area specifically comprises:
the processor is configured to determine an area corresponding to traffic greater than first preset traffic as the target area; or
the processor is configured to determine an area corresponding to traffic less than second preset traffic as the target area.

39. The network element of an access network according to claim 33 or 34, wherein the memory further stores a clear instruction; and
the transmission apparatus is further configured to: if a minimum distance between the first UE and the target area is greater than or equal to a second preset distance, send the clear instruction to the first UE, so that the first UE clears a configuration parameter of the first UE according to the clear instruction.

40. The network element of an access network according to claim 35, wherein
the processor is further configured to: determine whether the first UE satisfies a preset condition of base station handover; and if yes, determine, according to the measurement information, that UE having an optimal base station capability in remaining UE is second UE, wherein the remaining UE is other UE in the at least one UE than the first UE;
the transmission apparatus is further configured to send the activation message to the second UE, to activate a base station function of the second UE;
the transmission apparatus is further configured to send a handover control message to the first UE, so that the first UE hands over a user in a first cell from the first cell to a second cell according to the handover control message, wherein the first cell corresponds to the first UE, and the second cell corresponds to the second UE;
the receiving apparatus is further configured to receive a handover complete message sent by the first UE; and the transmission apparatus is further configured to send a deactivation message to the first UE, so that the first UE deactivates the base station function of the first UE according to the deactivation message.

41. The network element of an access network according to claim 40, wherein that the processor is configured to determine whether the first UE satisfies a preset condition of base station handover specifically comprises:
the processor is configured to: determine whether the second UE whose base station capability is superior to the base station capability of the first UE exists in the remaining UE; and if yes, determine that the first UE satisfies the preset condition of base station handover.

42. The network element of an access network according to claim 40, wherein that the processor is configured to determine whether the first UE satisfies a preset condition of base station handover specifically comprises:
the processor is configured to: determine whether a distance between the first UE and a center of the target area exceeds a third preset distance; and if yes, determine that the first base station satisfies the preset condition of base station handover.

43. The network element of an access network according to claim 40, wherein
when a base station configuration parameter of the first UE is the same as a base station configuration parameter of the second UE, the handover control message is used to start a soft handover process by the first UE; and
when the base station configuration parameter of the first UE is different from the base station configuration parameter of the second UE, the handover control message is used to start a hard handover process by the first UE.

44. User equipment UE, comprising:
a receiving apparatus, a transmission apparatus, a processor, and a memory, wherein the processor and the memory receive external information of a network element of an access network by using the receiving apparatus, and the processor and the memory transmit information to an exterior of the network element of an access network by using the transmission apparatus;
the receiving apparatus is configured to: when the UE is located in the target area, or a minimum distance between the UE and the target area is less than a first preset distance, receive an activation message sent by the network element of an access network;
the memory is configured to store the activation message; and
the processor is configured to activate a base station function of the UE according to the activation message.

45. The UE according to claim 44, wherein the memory is further configured to store a message and a base station configuration parameter;
the transmission apparatus is configured to send the message to the network element of an access network, wherein the message is used to indicate that the UE can be configured to be a base station;
the receiving apparatus is further configured to receive the base station configuration parameter sent by the network element of an access network; and
the processor is further configured to configure, according to the base station configuration parameter, the UE to be UE having a base station capability.

46. The UE according to claim 44, wherein the memory is further configured to store measurement information; the processor is used for the measurement information; and
the transmission apparatus is configured to send the measurement information to the network element of an access network.

47. The UE according to claim 44, wherein the memory is further configured to store a handover control message, a cell handover command, a handover complete message, and a deactivation message;
the receiving apparatus is further configured to receive the handover control message sent by the network element of an access network;
the transmission apparatus is further configured to send, according to the handover control message, the cell handover command to a user served by the UE;
the transmission apparatus is further configured to send the handover complete message to the network element of an access network;
the receiving apparatus is further configured to receive the deactivation message sent by the network element of an access network; and
the processor is configured to deactivate the base station function of the UE according to the deactivation message.

48. The UE according to any one of claims 44 to 47, wherein the memory is further configured to store a clear instruction;
the receiving apparatus is further configured to receive the clear instruction sent by the network element of an access network; and
the processor is further configured to clear a configuration parameter of the UE according to the clear instruction.
